# EUROPÄISCHE PATENTSCHRIFT

(11) **EP 4 547 363 B1**
(45) Veröffentlichungstag und Bekanntmachung des Hinweises auf die Patenterteilung: **07.10.2026**
(21) Anmeldenummer: 23736097.9
(22) Anmeldetag: 28.06.2023
(51) Int. Cl.: B01D 46/00, B01D 46/42, B01D 46/44

(54) **KOMMUNIZIERENDE FILTERANLAGEN**
COMMUNICATING FILTER SYSTEMS
SYSTÈMES DE FILTRATION COMMUNICANTS

(30) Priorität: 01.07.2022 DE 102022116521
(43) Veröffentlichungstag der Anmeldung: 07.05.2025
(73) Patentinhaber: Kappa Climate Solutions Holding GmbH, 4407 Steyr-Gleink (AT)
(72) Erfinder: KRÜGER, Klaus, 4400 Steyr / St. Ulrich (AT); HUNZIKER, Urs, 8706 Meilen (CH)
(74) Vertreter: Dilg, Haeusler, Schindelmann Patentanwaltsgesellschaft mbH
(86) Internationale Anmeldenummer: PCT/EP2023/067721
(87) Internationale Veröffentlichungsnummer: WO 2024/003179

(56) Entgegenhaltungen:
- EP-A1- 3 785 786
- WO-A1-2019/046381
- US-A1- 2018 299 156
- US-A1- 2020 292 192

## Beschreibung

### Technisches Gebiet

Die vorliegende Erfindung betrifft ein Filtersystem zur Filterung von Luft in Räumen eines Gebäudes. Ferner betrifft die vorliegende Erfindung ein Verfahren zur Filterung von Luft in Räumen eines Gebäudes.

### Hintergrund der Erfindung

Filtersysteme in Raumluftsystemen sorgen für die Belüftung und Entlüftung von Räumen in Gebäuden und filtern Schadstoffe aus der Luft. In Gebäuden werden dabei primäre Filteranlagen eingesetzt, welche beispielsweise zentrale Lüftungsanalagen in einem Gebäude und kontrollierte Wohnungslüftungen umfassen. Die primären Filteranlagen können dabei eine Verbindung zur Außenluft aufweisen. Zudem werden oftmals sekundäre Filteranlagen als Ergänzung zu den primären Filteranlagen eingesetzt. Eine sekundäre Filteranlage umfasst z.B. ein Luftumwälzsystem mit Filterung und ist zur Installation in einem Raum vorgesehen (beispielsweise Raumluftreiniger).

Die sekundären Filteranlagen werden oftmals autark von der primären Filteranlage in einem Gebäude betrieben, sodass die Gesamtfilterleistung oftmals nicht den Bedürfnissen entspricht oder andererseits zu groß für den tatsächlichen Bedarf eingestellt ist, sodass Energie unnötig verschwendet wird.

WO 2019/046381 A1, EP 3 785 786 A1, US 2020/292192 A1 und US 2018/299156 A1 sind relevante Dokumente aus dem Stand der Technik.

### Darstellung der Erfindung

Es ist eine Aufgabe der vorliegenden Erfindung, die Filterleistung in einem Gebäude optimal einzustellen.

Diese Aufgabe wird mit einem Filtersystem zur Filterung von Luft in Räumen eines Gebäudes sowie einem Verfahren zur Filterung von Luft in Räumen eines Gebäudes gemäß den Gegenständen der unabhängigen Patentansprüche gelöst.

Gemäß einem ersten Aspekt wird ein Filtersystem zur Filterung von Luft in Räumen eines Gebäudes beschrieben. Das Filtersystem weist eine Filtervorrichtung aufweisend eine Lüftereinheit und ein Filterelement auf, welche in einem Raum platzierbar ist. Zu filternde Luft ist mittels der Lüftereinheit durch das Filterelement zur Filterung strömbar, wobei die Filtervorrichtung ein Sensorelement aufweist zum Bestimmen zumindest eines Filtervorrichtungsparameters bestehend zumindest aus einen Luftparameter (z.B. CO- Gehalt, CO₂- Gehalt, rel. Luftfeuchtigkeit, Luftdruck, O₂-Gehalt, Fremdstoffanteil) der zu filternden Luft an der Filtervorrichtung und/oder einem Betriebsparameter der Filtervorrichtung (z.B. Stromverbrauch, Luftdurchsatz, Lautstärke etc.).

Ferner weist die Filtervorrichtung ein weiteres Sensorelement, welches beabstandet von der Filtervorrichtung (im selben Raum oder in einem anderen Raum des Gebäudes) platzierbar ist, und zum Bestimmen zumindest eines weiteren Luftparameters (z.B. CO- Gehalt, CO₂- Gehalt, rel. Luftfeuchtigkeit, Luftdruck, O₂-Gehalt, Fremdstoffanteil) der Luft an dem weiteren Sensorelement ausgebildet ist.

Ferner weist die Filtervorrichtung eine Steuereinheit auf, welche mit der Filtervorrichtung und mit dem weiteren Sensorelement gekoppelt ist und konfiguriert ist, basierend auf dem Filtervorrichtungsparameter und dem weiteren Luftparameter zumindest einen Raumzustand (z.B. CO₂-Raumverteilung, ortsabhängige Fremdstoffbelastung, Belegung durch Personen (Personen anwesend/keine Personen anwesend, Verteilung der Personen im Raum, Geräuschpegel im Raum, etc.) oder einen Filterzustand (z.B. Filterbelegungszustand, Informationen bzgl. Notwendigkeit eines Filteraustausches, Informationen bzgl. Notwendigkeit einer Lüfterwartung notwendig) zu bestimmen.

Gemäß einem weiteren Aspekt wird ein Verfahren zur Filterung von Luft in Räumen eines Gebäudes mit einem oben beschriebenen Filtersystem beschrieben.

Ein erfindungsgemäßes Filtersystem wird typischerweise in Gebäuden zur Filterung und Reinigung von Luft oder auch zur Reinigung von Luft in Produktionsprozessen von Fabriken eingesetzt.

Die Filtervorrichtung weist beispielsweise ein Gehäuse auf, in welchem ein Filterelement angeordnet ist oder eine Vielzahl von Filterelementen in Serie entlang der Strömungsrichtung der Luft durch die Filtervorrichtung oder parallel zur Strömungsrichtung angeordnet sind. Das Filterelement kann austauschbar vorgesehen sein.

Das Filterelement der Filtervorrichtung weist beispielsweise ein flächiges Filtermaterial auf, welches in einem umlaufenden Trägerrahmen fixiert ist. Das Filterelement kann als Taschenfilter ausgebildet werden, wobei in dem Trägerrahmen eine Vielzahl von Taschen von Filtermaterial befestigt sind und der Luftstrom in die Taschen eingeleitet wird, um die einströmende Luft zu filtern. Ferner kann das Filtermodul ebenfalls als Patronenfilter, Schlauchfilter, Kerzenfilter, Kompaktfilter und HEPA-Filter ausgebildet sein.

Die Lüftereinheit der Filtervorrichtung saugt insbesondere zu filternde Luft in die Filtervorrichtung, sodass die Luft durch das Filterelement strömt. Die Lüftereinheit kann beispielsweise einen Axial- oder einen Radialverdichter aufweisen und entsprechend die Luft entlang einer translatorischen Strömung geradlinig oder rechtwinklig strömen. Die Lüftereinheit kann insbesondere durch die Steuereinheit gesteuert werden, sodass der Luftdurchsatz durch die Filtervorrichtung einstellbar ist.

Das Sensorelement der Filtervorrichtung ist konfiguriert zum Bestimmen zumindest eines Filtervorrichtungsparameters bestehend zumindest aus einen Luftparameter (z.B. CO- Gehalt, CO₂- Gehalt, rel. Luftfeuchtigkeit, Luftdruck, O₂-Gehalt, Fremdstoffanteil) der zu filternden Luft an der Filtervorrichtung und/oder einem Betriebsparameter der Filtervorrichtung (z.B. Stromverbrauch, Luftdurchsatz, Lautstärke etc.). Das Sensorelement kann dabei stromaufwärts vor dem Filterelement angeordnet werden, um den Luftparameter vor der Filterung zu messen. Zusätzlich oder alternativ kann das Sensorelement nach dem Filterelement angeordnet werden, um den Luftparameter nach der Filterung zu messen. Somit kann beispielsweise eine qualitative und auch quantitative Filterleistung festgestellt werden. Zudem kann ein bestimmter Luftparameter, insbesondere vor der Filterung, Aufschluss über den unten beschriebenen Raumzustand geben, beispielsweise ob Personen im Raum anwesend sind.

Das Sensorelement misst somit Luftparameter wie beispielsweise eine Konzentration verschiedener Luftbegleitstoffe bzw. Fremdstoffe und/oder der Luftqualität. Das direkte Messen von Fremdstoffen oder Gruppen von Fremdstoffen im Luftstrom kann mittels des Sensorelements bereitgestellt werden. Dies kann z.B. die Feinstaubmenge einer bestimmten Durchmesserklasse betreffen. Ferner können beispielsweise andere Fremdstoffe vorgängig weggefiltert werden, sodass nur die bestimmte Luftbegleitstoffe auf den Sensor treffen. Bei Verwirbelungen durch turbulente Strömungen der Luft durch die Filtervorrichtung werden schwerere Stoffe (Partikel, Moleküle, Aerosole, usw.) durch Zentrifugalkräfte in Radialrichtung einer Strömungswalze wegbewegt, was zu einer Dehomogenisierung der Luftstromzusammensetzung führt. Das Sensorelement kann entsprechend beabstandet von einer Wandung des Strömungskanals der Filtervorrichtung angeordnet werden, um den Einfluss der Verwirbelungen zu reduzieren.

Das Sensorelement weist beispielsweise einen MEMS-Sensor auf. Ferner kann das Sensorelement insbesondere derart konfiguriert sein, dass das Sensorelement für eine Fourier-Transform-Infrarotspektrometer-Analyse FTIR- und/oder einer Nahinfrarotspektroskopien Analyse verwendbar ist. Dabei können Parameter wie Partikel pro Volumen gemessen werden. Ferner kann das Sensorelement einen Widerstandssensor aufweisen zur Messung der Luftbegleitstoffe und/oder der Luftqualität. Dabei kann beispielsweise zusätzlich eine Triggersubstanz eingesetzt werden, um das Vorhandensein von gewissen Fremdstoffen in der Luft zu messen (z.B. Messung nach Bresle).

Entsprechend kann das weitere Sensorelement wie das oben beschriebene Sensorelement ausgebildet werden. Das weitere Sensorelement ist insbesondere beabstandet von der Filtervorrichtung (im selben Raum oder in einem anderen Raum des Gebäudes) platzierbar, und zum Bestimmen zumindest eines weiteren Luftparameters (z.B. CO- Gehalt, CO₂- Gehalt, rel. Luftfeuchtigkeit, Luftdruck, O₂-Gehalt, dem Fremdstoffanteil) der Luft an dem weiteren Sensorelement ausgebildet. Das weitere Sensorelement kann, wie in den unten beschriebenen Ausführungsbeispielen erläutert, ein separates eigenständiges Sensorelement darstellen und beabstandet von der Filtervorrichtung angeordnet werden. Das weitere Sensorelement kann ferner in einer weiteren (z.B. sekundären) Filtervorrichtung eingebaut sein. Ferner kann das weitere Sensorelement Teil einer primären Filtervorrichtung sein. Insbesondere können eine Vielzahl von (sekundären) Filtervorrichtungen mit entsprechenden weiteren Sensorelementen angeordnet werden und ferner mehrere eigenständige und/oder in der primären Filteranlage angeordnete weitere Sensorelemente vorgesehen werden.

Ferner weist die Filtervorrichtung die Steuereinheit auf, welche mit der Filtervorrichtung und mit dem weiteren Sensorelement gekoppelt ist und konfiguriert ist, basierend auf dem Filtervorrichtungsparameter (d.h. dem Luftparameter der zu filternden Luft an der Filtervorrichtung oder einen Betriebsparameter der Filtervorrichtung) und dem weiteren Luftparameter zumindest einen Raumzustand (z.B. CO₂-Raumverteilung, Belegung durch Personen (Personen anwesend/keine Personen anwesend, Verteilung der Personen im Raum, Geräuschpegel im Raum, etc.) oder einen Filterzustand (z.B. Filterbelegungszustand, Informationen bzgl. Notwendigkeit eines Filteraustausches, Informationen bzgl. Notwendigkeit einer Lüfterwartung notwendig) zu bestimmen.

Aufgrund der räumlichen Beabstandung des Sensorelements und des weiteren Sensorelements, kann beispielsweise eine örtliche Verteilung von Konzentrationen der Luftparameter festgestellt werden. Basierend darauf kann die Steuereinheit Aussagen treffen, beispielsweise der räumlichen Gruppierung von Personen oder Aussagen über das Vorhandensein und dem örtlichen Vorliegen eines Gefahrenherds. Steigt beispielsweise die Rußbelastung an dem weiteren Sensorelement gegenüber dem Sensorelement an, so kann daraus geschlossen werden, dass ein Brandherd örtlich in der Nähe des weiteren Sensorelement vorliegt. Entsprechend kann beispielsweise aufgrund einer unterschiedlichen CO2 Konzentration an dem Ort des Sensorelements gegenüber dem Ort des weiteren Sensorelements darauf geschlossen werden, dass Personen (entsprechend ihrer ausgeatmeten Luft) eher am Ort des Sensorelements oder am Ort des weiteren Sensorelements gruppiert sind. Ferner kann aufgrund der gemessenen Luftqualität an der Filtervorrichtung durch Vergleich der Luftqualität an dem weiteren Sensorelement ein Filterzustand (z.B. Filterbelegungszustand, Informationen bzgl. Notwendigkeit eines Filteraustausches, Informationen bzgl. Notwendigkeit einer Lüfterwartung notwendig) bestimmt werden.

Die Steuereinheit ist beispielsweise in der Filtervorrichtung angeordnet. Beispielsweise ist die Steuereinheit zum Steuern der Lüftereinheit der Filtervorrichtung ausgebildet. Zusätzlich oder alternativ kann die Steuereinheit mit einer primären Filteranlage eines Gebäudes gekoppelt sein, um die Belüftungsleistung bzw. die Filterleistung der primären Filteranlage zu steuern. Dabei kann die Steuereinheit an einem zentralen Ort des Gebäudes, in der primären Filteranlage oder in der oben beschriebenen Filtervorrichtung angeordnet sein.

Mit dem erfindungsgemäßen Filtersystem und der getrennten Sensormessung des Sensorelements und des weiteren Sensorelements, können aufgrund der dadurch bezogenen Filtervorrichtungsparameter der Filtervorrichtung und der weiteren Luftparameter ein Raumzustand oder ein Filterzustand bestimmt werden, um dadurch erneut Informationen zur Steuerung des Gesamtsystems, einschließlich einer primären Filteranlage oder der Filtervorrichtung, zu erlangen.

Gemäß einer weiteren beispielhaften Ausführungsform ist zumindest der Luftparameter oder der weitere Luftparameter ausgewählt aus der Gruppe bestehend aus dem CO-Gehalt, CO2-Gehalt, der rel. Luftfeuchtigkeit, dem Luftdruck, dem Sauerstoffgehalt, Strömungsgeschwindigkeit der Luft, dem Fremdstoffanteil aufweisend z.B. Fremdstoffpartikel, insbesondere dem Feinstaubgehalt, Partikelgröße der Fremdstoffpartikel, insbesondere dem Durchmesser der Fremdstoffpartikel, Fremdstoffpartikelart, dem Taupunkt und der Lufttemperatur.

Gemäß einer weiteren beispielhaften Ausführungsform ist zumindest der Betriebsparameter der Filtervorrichtung ausgewählt aus der Gruppe bestehend aus dem Stromverbrauch der Filtervorrichtung, dem Luftdurchsatz durch das Filterelement, der Lautstärke der Lüftereinheit, der Strömungslautstärke der durchströmenden Luft und der Temperatur der Lüftereinheit und dem Druckabfall der durchströmenden Luft über dem Filterelement.

Mittels der Sensorelemente können auch Gasanteile, Flüssigkeitsanteile oder Feststoffe im Luftstrom detektiert und z.B. deren chemisch-/physikalische Eigenschaften, insbesondere Mengen und/oder (z.B. mittlere) Durchmesser ermittelt werden. Aufgrund dieser Basismesswerte können auch nachgegliederte Berechnungen wir CO₂-Abdruck, (Energie-)einsparpotential (z.B. abhängig vom Druckabfall über den Filter, was durch das Filtermaterial oder Filterwechsel beeinflusst werden kann) oder Energieverbrauch berechnet werden. Ebenso können mittels eines Algorithmus Messwerte angepasst, normiert oder adaptiert werden. Diese Messwerte können drahtlos oder drahtgebunden an andere Systeme übertragen werden.

Gemäß einer weiteren beispielhaften Ausführungsform ist die Steuereinheit konfiguriert zumindest den Raumzustand zu bestimmen, welcher aus der Gruppe bestehend aus einer CO2-Verteilung im Raum, einer Anwesenheit von Personen im Raum, einer Personenbelegung im Raum, einer Verteilung der Personen im Raum, Geräuschpegel im Raum, ein Vorhandensein und/oder einer Position einer Gefahrenquelle, insbesondere einer Feuerquelle, einer Aerosolkonzentration, einer Feinstaubkonzentration und/oder einer Virenkonzentration, im Raum ausgewählt ist.

Gemäß einer weiteren beispielhaften Ausführungsform ist die Steuereinheit konfiguriert zumindest den Filterzustand zu bestimmen, welcher aus der Gruppe bestehend aus einer Filterbelegung des Filterelements, einer Filteraustauschangabe und einer Lüfterwartungsangabe ausgewählt ist. Die Steuereinheit kann beispielsweise basierend auf den Filtervorrichtungsparametern, z.B. dem Betriebsparametern und dem Luftparameter der zu filternden Luft an der Filtervorrichtung den Filterzustand bestimmen. Beispielsweise kann der Luftdurchsatz durch das Filterelement bestimmt werden und das Sensorelement kann als Luftparameter die Konzentration, z.B. von Feinstaub, vor und nach dem Filterelement bestimmen. Wenn die Filterung von Feinstaub in Relation zu dem eingestellten Luftdurchsatz am Filterelement nicht einem Sollwert entspricht, kann auf eine Filterbelegung geschlossen werden und ein Filterwechsel kann mittels der Steuereinheit angezeigt werden. Ferner kann bei einem gemessenen Stromverbrauch der Lüftereinheit in Relation zu einem Luftdurchsatz durch das Filterelement auf einen Defekt der Lüftereinheit geschlossen werden.

Gemäß einer weiteren beispielhaften Ausführungsform weist die Steuereinheit ein Anzeigeelement zum Anzeigen des Raumzustands und/oder des Filterzustands auf. Das Anzeigeelement kann beispielsweise aus optischen Anzeigeelementen bestehen, wie beispielsweise LEDs, welche mittels eines bestimmten Farbtons den Raumzustand oder den Filterzustand anzeigen. Ist beispielsweise der CO2 Gehalt im Raum zu hoch und/oder der Sauerstoffgehalt zu niedrig, kann beispielsweise eine rote LED angezeigt werden. Ist der CO2 Gehalt unterhalb eines Grenzwertes kann beispielsweise eine grüne LED leuchten. Entsprechend kann beispielsweise ein freier, betriebsfähiger Filterzustand mit grün angezeigt werden und ein belegter Filterzustand, wodurch ein Filterwechsel des Filterelements notwendig ist, mit rot angezeigt werden. Ferner kann das Anzeigeelement ein grafisches Display, insbesondere ein berührungssensitives Display (Touch Display), ausbilden. Auf einem grafischen Display können beispielsweise komplexere Informationen, wie beispielsweise eine Abbildung des Raumes dargestellt werden und entsprechende Bereiche, in welchen ein bestimmter Raumzustand oder ein Filterzustand vorliegt. So kann beispielsweise der Bereich im Raum graphisch dargestellt werden, in welchem eine hohe CO2 Konzentration vorliegt und ein anderer Bereich im Raum, in welchen eine geringere CO2 Konzentration vorliegt.

Gemäß einer weiteren beispielhaften Ausführungsform ist das weitere Sensorelement in demselben Raum wie die Filtervorrichtung angeordnet. Somit können an mehreren Orten im Raum entsprechende Luftparameter gemessen werden, um insbesondere den gesamten Raum als Messgebiet abzudecken. Entsprechend kann eine sichere Aussage über das Überschreiten einzelner Grenzwerte von Luftparametern im Raum getroffen werden.

Gemäß einer weiteren beispielhaften Ausführungsform ist das weitere Sensorelement in einem anderen Raum als die Filtervorrichtung angeordnet. Entsprechend können Luftparameter aus mehreren Räumen eines Gebäudes festgestellt bzw. gemessen werden. Steigt beispielsweise in einem Raum der CO2 Gehalt im Vergleich zu einem anderen Raum, so kann beispielsweise die Belegung des Raumes mit Personen festgestellt werden. Entsprechend kann beispielsweise die primäre Lüftungsanlage (beispielsweise die zentrale Lüftungsanlage) oder die einzelne Filtervorrichtungen in einem der Räume gesteuert werden, um den gewünschten Raumzustand in einem Raum herzustellen. Aufgrund der Kenntnis der Belegung des Raumes über den Vergleich der CO2 Werte in den entsprechenden Räumen, kann ferner ein digitaler Belegungsplan der Räume mittels der Steuereinheit gesteuert werden. Steigt beispielsweise der CO2 Gehalt in einem Raum und entspricht dieser einer Belegung mit mehreren Personen, so kann dieser Raum als belegt in einem Belegungsplaner festgestellt werden. Durch Messung und Bewertung des Geräuschpegels in einem Raum, kann auf Anzahl und Intensität der sprechaktiven Personen im Raum geschlossen werden und die Lüftungsleistung daran angepasst werden, da der Ausstoß von Aerosolen durch Personen mit der Sprachlautstärke ansteigt.

Gemäß einer weiteren beispielhaften Ausführungsform weist das Filtersystem eine weitere Filtervorrichtung im Raum auf, beabstandet von Filtervorrichtung, wobei die weitere Filtervorrichtung das weitere Sensorelement aufweist. Die weitere Filtervorrichtung, welche das weitere Sensorelement aufweist, kann beispielsweise einen Lüftungsauslass in einem Raum darstellen, wobei der Lüftungsauslass Teil einer zentrale Lüftungsanlage darstellen kann. Das weitere Sensorelement ist somit Teil einer weiteren Filtervorrichtung, welche beabstandet zu der Filtervorrichtung im Raum angeordnet ist. Die Steuereinheit kann basierend auf den gemessenen Parametern und weiteren Luftparametern der entsprechenden Filtervorrichtungen den Raumzustand des Raumes ortsabhängig anzeigen. So kann beispielsweise gezielt eine Raumkarte erstellt werden, in welchem die einzelnen Konzentrationen der gewählten Luftparameter dargestellt werden. Basierend darauf kann in einer weiteren beispielhaften Ausführungsform die Steuereinheit die einzelnen Filtervorrichtungen einzeln steuern, um basierend auf deren Filterleistung die gewünschte Konzentration der Luftparameter in einem Raum einzustellen.

Gemäß einer weiteren beispielhaften Ausführungsform weist die weitere Filtervorrichtung ein weiteres Filterelement auf, wobei die weitere Filtervorrichtung insbesondere ein Teil einer Zentralfilteranlage eines Gebäudes ist. Basierend auf den gemessenen weiteren Luftparametern kann die Steuereinheit beispielsweise die zentrale Lüftungsanlage ansteuern, um zusammen mit der lokalen, im Raum befindlichen Filtervorrichtung die gewünschten Luftparameter einzustellen.

Gemäß einer weiteren beispielhaften Ausführungsform weist die weitere Filtervorrichtung eine weitere Lüftereinheit auf und ist insbesondere bewegbar (z.B. als mobile sekundäre Filtervorrichtung) ausgebildet. Mittels Vergleichs der einzelnen Leistungsdaten der Lüftereinheit der Filtervorrichtung und der weiteren Lüftereinheit der weiteren Filtervorrichtung, kann ferner auf den entsprechenden Filterzustand in den entsprechenden Filtervorrichtungen geschlossen werden, um beispielsweise Informationen über die Filterbelegung der entsprechenden Filterelemente zu erhalten.

Gemäß der Erfindung ist die Steuereinheit konfiguriert, die Positionsdaten der Filtervorrichtung und/oder des weiteren Sensorelements (bzw. der weiteren Filtervorrichtung) zu bestimmen (beispielsweise mittels eines Indoor-Positionierungssystems, eines WLAN's oder mittels Ortung der Anschlussstelle (Steckdose) der entsprechenden Filtervorrichtung im Raum) und/oder vorkonfigurierte Positionsdaten zu berücksichtigen.

Gemäß einer weiteren beispielhaften Ausführungsform ist die Steuereinheit konfiguriert basierend auf den Positionsdaten eine Heatmap (für den Luftparameter "Temperatur" oder analog für andere Messwerte), ein örtliches Verteilungsbild einer Gaskonzentration, insbesondere eine CO2-Konzentrationsverteilung (für den Luftparameter "CO2-Konzentration") oder O2- Konzentrationsverteilung (für den Luftparameter "O2-Konzentration"), eine Personenverteilung (zum Beispiel berechnete Luftparameter basierend auf der CO2 Konzentration), eine Aerosolverteilung (für den Luftparameter "Aerosol-Konzentration"), eine Feuchtigkeitsverteilung (für den Luftparameter "relative Luftfeuchtigkeit"), eine Virenverteilung (zum Beispiel mittels Analyse von entsprechenden Indikatoren und Markern, die im Filterelement angeordnet sein können), eine Fremdstoffanteilkonzentration, z.B. Feinstaubkonzentrationsverteilung (für den Luftparameter "Feinstaubkonzentration") zu erstellen. Mittels der Kenntnis der Positionsdaten des Sensorelements und des weiteren Sensorelements werden gemäß der Erfindung grafische Abbildungen eines Raumes mit entsprechenden örtlichen Konzentrationen von gewünschten Luftparametern dargestellt.

Gemäß einer weiteren beispielhaften Ausführungsform ist die Steuereinheit konfiguriert, basierend auf dem Raumzustand und/oder dem Filterzustand die Filtervorrichtung, insbesondere die Lüftereinheit, zu steuern. Beispielsweise kann die Steuereinheit die Filtervorrichtung, und mehrere weitere Filtervorrichtungen steuern. So kann beispielsweise in einem Raum eine Vielzahl von örtlichen (mobilen), sekundären Filtervorrichtungen installiert werden und zusätzlich in dem Raum ein Teil einer primären zentralen Lüftungsanlage vorgesehen sein. Basierend auf den entsprechenden gemessenen positionsbezogenen Luftparameter kann die Steuereinheit individuell alle Filtervorrichtungen, sowohl die sekundären Filtervorrichtungen als auch die primäre Filtervorrichtung steuern. Mit anderen Worten kann aufgrund eines Bezuges der Messwerte der Luftparameter zueinander eine Aktion (Steueraktion) ausgelöst und/oder eine Information angezeigt werden. Insbesondere kann eine der Filtervorrichtungen gesteuert und/oder geregelt werden, bevorzugt eine sekundäre Filtervorrichtung, welche bei den konventionellen Ansätzen bisher vor allem im Inselbetrieb aktiv waren.

Gemäß einer weiteren beispielhaften Ausführungsform ist die Steuereinheit konfiguriert, die Filtervorrichtung, insbesondere die Lüftereinheit, derart variabel zu steuern, dass diese Variation das räumliche Absauggebiet verlagert, insbesondere, dass der Einfluss der Variation des Absauggebiets die Bestimmung des Raumzustands mitbestimmt. Beispielsweise kann die Richtung, aus welcher ein Luftstrom in die Filtervorrichtung eingesaugt wird, gesteuert werden. Hierfür kann die Filtervorrichtung beispielsweise beabstandete Lufteingänge aufweisen, durch welche selektiv Umgebungsluft angesaugt werden kann. Zusätzlich oder alternativ kann die Filtervorrichtung steuerbare Luftklappen aufweisen, die gezielt eine Einsaugrichtung einstellen. Die Steuereinheit kann somit das Absauggebiet, aus welcher der Luftstrom angesaugt wird, steuern und entsprechend das Absauggebiet für die Analyse des Raumzustands und/oder des Filterzustands heranziehen. Der Messort bzw. das Absauggebiet wird somit geändert, ohne dass die Filtervorrichtung ihren Standort verlässt. Bei primären Filtervorrichtungen kann durch eine Klappen- oder Ventilsteuerung am Ort der Luftabsaugung im Raum der Luftstrom derart eingestellt werden, dass nur eine bestimmte Zone, insbesondere ein Raum oder ein bestimmter Raumbereich, Analyseluft für das Sensorelement liefert. Demgegenüber kann eine sekundäre Filtervorrichtung durch interne Mechanismen (z.B. einzelne Lüfter in der Leistung variieren oder Ansaugklappen 'links' oder 'rechts' verstellen) die Richtung, aus welcher Luft angesaugt wird, variieren, was wiederum Messwerte aus unterschiedlichen Absauggebieten ermöglicht.

Gemäß einer weiteren beispielhaften Ausführungsform ist die Steuereinheit konfiguriert, die Filtervorrichtung, insbesondere die Lüftereinheit, derart variabel zu steuern, dass eine zukünftige Energieverfügbarkeit und/oder der aktuelle und/oder zukünftige Energieverbrauch des Filtersystems und/oder des Gebäudes berücksichtigbar ist. Die Steuereinheit ist insbesondere konfiguriert, selbsttätig oder teilautomatisch mit Zustimmfunktion die Filtervorrichtung basierend auf der zukünftigen Energieverfügbarkeit und/oder des aktuellen und/oder zukünftigen Energieverbrauchs des Filtersystems und/oder des Gebäudes zu steuern und/oder innerhalb einem Vorgabebereich zu regeln.

So kann zum Beispiel ein Gebäudeteil vorsorglich heruntergekühlt (z.B. Sitzungszimmer auf Reservationstermin hin) werden, wenn bekannt ist, dass zu einem späteren Zeitpunkt Energie für andere Sachen (z.B. Auto laden) benötigt wird. Während dem Energiebedarf für andere Betriebszustände des Gebäudes wird der gekühlte Bereich auf Umluft umgestellt und die Luftqualität ortsabhängig überwacht, so dass ab einem bestimmten reduzierten Qualitätslevel der Luft (ab einem bestimmten Wert eines bestimmten Luftparameters im Raum, beispielsweise Sauerstoffgehalt) die Ladeleistung reduziert und die Lüftung wieder verstärkt wird. Mit einer Parametrierung kann die Wichtigkeit von unterschiedlichen Luftparametern gemessen durch die Sensorelemente gewichtet und in den Energieverbrauchsentscheid der Steuereinheit einbezogen werden. Die Steuereinheit kann beispielsweise vollautomatisch und selbsttätig die Filtervorrichtungen steuern. Alternativ kann die Steuereinheit teilautomatisch die Filtervorrichtungen steuern und vor der Ausführung von kritischen Steuerungsentscheiden einem Bediener eine Empfehlung präsentieren, welcher dieser zustimmen muss (entspricht der oben genannten Zustimmfunktion).

Gemäß einer weiteren beispielhaften Ausführungsform ist das Filterelement derart ausgebildet, dass ein Druckabfall der durchströmenden Luft durch das Filterelement unter 450 Pa, insbesondere unter 250 Pa, weiter insbesondere unter 150 Pa liegt. Die Filterleistung des erfindungsgemäßen Filtermoduls, insbesondere des Filterbereichs, wird beispielsweise nach EN ISO 16890 gemessen, und ist für eine der Klassen "ISO Coarse", "ISO ePM10", "ISO ePM2,5" oder "ISO ePM1" besser als 50%.

Gemäß einer weiteren beispielhaften Ausführungsform ist die Filtervorrichtung konfiguriert, dass ein Luftvolumen pro Stunde und Quadratmeter Filterfläche des Filterelements unter 600 m³/(m²xh), insbesondere unter 140 m³/(m²xh), unter 85 m³/(m²xh) oder unter 50 m³/(m²xh) liegt, und/oder die Geschwindigkeit des Volumenstroms der Luft durch die Filtervorrichtung im Bereich 0,1 bis 5 m/s liegt, insbesondere im Bereich 0,2 m/s bis 3,4 m/s, weiter insbesondere zwischen 0,3 m/s bis 2,8 m/s liegt.

Das erfindungsgemäße Filterelement und insbesondere das Filtermaterial ist ausgebildet, dass bei einer Geschwindigkeit des Volumenstroms von 0.1 m/s bis 5 m/s durch den Filterkörper, der Druckabfall der Luft, welche durch den Filterkörper strömt, weniger als 450 Pascal beträgt. Entsprechend dient das Filterelement zur Reinigung großer Luftmassen bei geringem Druckverlust. Diese Werte können strukturell insbesondere durch die Auswahl des Filtermaterials und die entsprechenden Porengrößen und Gewebestrukturen des Filtermaterials eingestellt werden. Für die erfindungsgemäße Integration der Sensorelemente in den Filtervorrichtungen hat sich gezeigt, dass sich Betriebsdaten besonders eignen, wenn ein Volumenstrom im Filterelement zwischen 0.1 und 5 m/s, insbesondere zwischen 0.2 und 3.4 m/s, bevorzugt zwischen 0.3 und 2.8 m/s und ein Druckabfall über das Filterelement unter 450 Pa, insbesondere unter 250 Pa, bevorzugt unter 150 Pa liegt.

Wenn die entsprechende Filtervorrichtung innerhalb dieser Kennwerte betrieben wird, kann durch die erfindungsgemäß vorgeschlagenen Maßnahmen (oder eine Kombination davon) sichergestellt werden, dass das Sensorelement, kaum Störungen bei der Verortung hat, d.h. im ganzen Schwankungsbereich der Betriebsdaten die Sensordaten zum zugeordneten Ortsbereich passen. Auch ändert sich die Zusammensetzung des Luftstromes am Sensorelement bei einer Druckabfallvariation von 50 Pa bis 450 Pa nur unwesentlich. Die erfindungsgemäße Lösung eignet sich vor allem für Filtervorrichtungen, welche einen Druckabfall über der Filtervorrichtung von unter 500 Pa aufweisen, da vor allem dann die erfindungsgemäßen Optimierungen der Strömungswiderstände zum Tragen kommen. Besonders gute Ergebnisse werden dann erreicht, wenn in einer Betriebsart weniger als 450 Pa, insbesondere weniger als 250 Pa, bevorzugt weniger als 150 Pa Druckabfall im Filterelement vorliegen.

Zusätzlich wurde erkannt, dass die Begrenzung des Druckabfalls über das Filterelement durch eine erfindungsgemäß überdimensionierte Filterfläche (z.B. durch die unten beschriebene wellenförmige Integration der Filtermembran zwischen zwei Vliese) es erlaubt, den Volumenstrom pro Zeit und Fläche entsprechend zu reduzieren. So sind im Betrieb der Filtervorrichtung Luftvolumenmengen pro Stunde und Quadratmeter Filterfläche (d.h. einer sog. Filterflächenbelastung) unter 600 m³, insbesondere unter 450 m³ oder 140 m³, bevorzugt unter 85 m³, besonders bevorzugt unter 50 m³ möglich. Dies führt gleichzeitig zu einem weniger schnellen Belegen des Filterelements und dadurch zu kleineren Druckabfalldifferenzen über das Filterelement.

Gemäß einer weiteren beispielhaften Ausführungsform ist die Steuereinheit von der Filtervorrichtung und dem weiteren Sensorelement getrennt angeordnet. Die Steuereinheit kann beispielsweise drahtgebunden oder drahtlos Signale mit den Filtervorrichtungen und den entsprechenden Sensorelementen austauschen. Ferner kann die Steuereinheit entsprechende Signale mit den Lüftereinheiten austauschen.

Gemäß einer weiteren beispielhaften Ausführungsform ist die Steuereinheit konfiguriert, basierend auf dem bestimmten Raumzustand und/oder dem bestimmten Filterzustand einen Energieverbrauch der Filtervorrichtung zu bestimmen. Zusätzlich oder alternativ ist die Steuereinheit konfiguriert, basierend auf dem bestimmten Raumzustand und/oder dem bestimmten Filterzustand Steuerdaten für die Filtervorrichtung, insbesondere für die Lüftereinheit, zu bestimmen und diese einem Benutzer anzuzeigen und/oder mittels den Steuerdaten zumindest eine Filtervorrichtung, bevorzugt mehrere, insbesondere alle Filtervorrichtungen, selbsttätig steuert.

Somit kann die Steuereinheit Daten zum Energieverbrauch und/oder zum CO2-Footprint des Filtersystems und/oder der Filtervorrichtung generieren. Eine Filtervorrichtung und insbesondere dessen Filterelement benötigt mit zunehmender Belegung immer mehr Energie für die bestimmungsgemäße Verwendung, da durch die Filterbelegung die Druckdifferenz über den Filter zunimmt. Die Steuereinheit kann ferner Daten über Energiekosten oder über einen CO2-Fussabdruck des Filterelements aufgrund seiner Herstellung erhalten. Die Steuereinheit ist konfiguriert, basierend darauf eine Empfehlung bezüglich optimalem Filterwechselzeitpunkt (oder Abreinigungszeitpunkt) des Filterelements zu ermittelt und anzuzeigen. Insbesondere können einzelne Parameter wie Energiekosten, Sparpotential, CO2-Einsparung, CO2-Zertifikatskosten mittels der Steuereinheit generiert werden.

Gemäß einer weiteren beispielhaften Ausführungsform ist die Steuereinheit konfiguriert, den Raumzustand basierend auf dem bestimmten Fremdstoffanteil bzw. Feinstaub als Luftparameter zu analysieren, insbesondere basierend auf der Häufigkeit des Auftretens des Feinstaubs, insbesondere einer Häufigkeit von Durchmesserklassen des Feinstaubs und/oder der Zusammensetzung des Feinstaubs, insbesondere in Echtzeit, zu analysieren. Zum Beispiel eine zusätzlich reduzierte Strömungsgeschwindigkeit (mit kleinem Druckabfall über den Filter) wiederum führt zu einer homogeneren Luftstromführung und zu weniger turbulenten Luftverwirbelungen (welche z.B. Feinstaubpartikel radial wegdrängen). Dies ermöglicht es Messungen durchzuführen, welche einen Bezug auf die Feinstaubzusammensetzung (Durchmesser, Menge, Stoffanalyse, usw.) geben. Die Steuereinheit ist konfiguriert, Echtzeitanalysen bezüglich einer Feinstaubbelastung durchzuführen.

Gemäß einer weiteren beispielhaften Ausführungsform ist die Steuereinheit zum drahtlosen Signalaustausch von Sensorsignalen oder Steuerbefehlen mit der Filtervorrichtung und/oder mit dem weiteren Sensorelement gekoppelt, wobei die Filtervorrichtung filterbezogene Daten der Steuereinheit zur Verfügung stellt, insbesondere mittels RFID, NFC, Bluetooth, WLAN oder Protokollen der Gebäudeleittechnik zur Verfügung stellt, wobei die Steuereinheit insbesondere konfiguriert ist, dass auf Basis der filterbezogenen Daten ein Warnsignal generierbar ist und/oder eine Maßnahme ergreifbar ist, welche einen Durchsatz durch die Filtervorrichtung betrifft. Die Filtervorrichtung und die Steuereinheit können jeweils eine Antenne oder ein leiterbasierendes System aufweisen, welches die Bereitschaft des Filtersystems signalisiert, Daten auszutauschen. Solche Daten können nicht nur Parameter betreffend die Luftbegleitstoffe der Luft betreffen, sondern auch Informationen und Details der Filtervorrichtung beinhalten. So kann zum Beispiel je nach Leistungsfähigkeit einer eingesetzten Filtervorrichtung das Luftvolumen durch die Filtervorrichtung bzw. das Filtersystem angepasst werden. Ferner kann bei Überschreiten einer Laufzeit bzw. Belegungsdichte des Filterelements ein Signal abgesetzt werden, das entweder als Wartungssignal interpretiert werden kann, als auch als Steuersignal verwendet werden kann, um die Luftdurchsatzmenge zu reduzieren. Eine Ausgestaltungsvariante einer Sendevorrichtung in der Filtervorrichtung und/oder der Steuereinheit kann ein RFID Transponder sein (die z.B. auch Filterdaten in chiffrierter Form aufweist). Ferner können auch andere Kommunikationsmechanismen wie NFC, Bluetooth, WLAN usw. eingesetzt werden. Für drahtgebundene Kommunikation stehen nebst proprietären Protokollen auch Bussysteme von Gebäudeleitsystemen (LON, EIB, usw.) zur Verfügung.

Gemäß einer weiteren beispielhaften Ausführungsform bezieht die Steuereinheit von der Filtervorrichtung eine UniqueID, wobei die Unique ID Informationen bezüglich des Einsatzorts des Filtervorrichtung aufweist, wobei die Steuereinrichtung die Unique ID via NFC, Bluetooth, WLAN, proprietären Protokollen oder Protokollen von Gebäudeleitsystemen, insbesondere LON oder EIB, empfängt. Basierend auf der Unique ID ist der Betrieb und/oder die Konfiguration des Filtervorrichtung einstellbar. In einer weiteren besonders bevorzugen Ausführungsform weist die unique ID Informationen bzgl. des Einbauorts der Filtervorrichtung im Filtersystem auf. Diese ID erlaubt es, aus einer vorkonfigurierten Betriebsart des Filtersystems oder der Filtervorrichtung, die für den spezifischen Betrieb benötigen Betriebsparameter vorzuwählen oder hinterlegte Daten einer Systemkonfiguration abzurufen. Insbesondere bei der Verwendung von verschlüsselten Protokollen kann so beim Filterwechsel eine Neukonfiguration vermieden werden und eine 'Plug and Play' realisiert werden. Entsprechende Daten können vom Filtersystem bzw. der Filtervorrichtung beim Wechsel übertragen oder via Cloud transferiert werden. Die Übertragung der unique ID an das Filtersystem kann mit für den Fachmann bekannten Mechanismen unter Nutzung von QR-Code, Barcode, OCR-Schriften (und deren Nachfolger für maschinenlesbare Schriften), RFID, NFC, Bluetooth, WLAN, proprietären Protokollen oder Protokollen von Gebäudeleitsystemen (LON, EIB, usw.) erfolgen. Durch diesen Mechanismus wird es auch möglich, ein Filtersystem bzw. eine Filtervorrichtung auszuliefern, bei welchem erst Funktionen freigeschaltet werden, wenn ein Teil der unique ID zum vereinbarten Lieferumfang dazugehört. Durch diesen Mechanismus wird es auch möglich, ein Filtersystem auszuliefern, bei welchem erst Funktionen freigeschaltet werden, wenn ein Teil der unique ID zum vereinbarten Lieferumfang dazugehört.

Gemäß einer weiteren beispielhaften Ausführungsform weist das Filterelement ein Filtermaterial auf, welches eine Lage Vlies, insbesondere mehrere Lagen Vlies enthält, wobei das Filterelement austauschbar in der Filtervorrichtung anordbar ist. Das Filterelement ist z.B. ein Einwegfilter. Ein Vlies besteht aus Fasern begrenzter Länge, Endlosfasern (Filamenten) oder geschnittenen Garnen, die zu einem Vlies (einer Faserschicht, einem Faserflor) zusammengefügt und verbunden sind. Durch die Verkettung der Fasern wird ein luftdurchlässiges Material mit engen, kleinporigen Luftdurchlässen bereitgestellt, wodurch eine gute Filterwirkung, insbesondere von Luftpartikeln, erzielt wird.

Da ein austauschbares Filterelement (insbesondere als Einwegfilter) nicht genau auf das umgebene Gehäuse der Filtervorrichtung angepasst sein muss, ist ferner von Vorteil, wenn das Filtermodul mögliche Luftresonanzen verhindert. Bei Filtermaterialien aus regelmäßig angeordnetem Filtermedium (z.B. gewobene, gestanzte, geätzte oder gebohrte Filter) existiert die Möglichkeit, dass durch selbstorganisierende Effekte des Luftstroms Resonanzen und damit negative Effekte entstehen (Geräusche, Wiederablösen von bereits eingebetteten Schadstoffen, insbesondere bei Start und Stopp der Anlage, bei Varianz von physikalischen Messwerten, etc.). Es hat sich gezeigt, dass bei der erfindungsgemäßen Lösung die Verwendung einer Lage eines Vlieses diesen Schwingungseffekt dämpft. Diese Dämpfung entsteht dadurch, dass unregelmäßig und zufällig Fasern abgelegt und in Haftung gebracht. Diese Unregelmäßigkeit reduziert das schwingungsmäßige Selbstorganisationspotential. Diese Dämpfung kann bei Verwendung mehrerer Vlieslagen im Aufbau des Filtermaterials verstärkt werden, insbesondere wenn diese zumindest leicht unterschiedliche Vliesmaterialien oder Vliesschichten aufweisen. Ein Unterschied kann durch die Herstellung von Vliesmaterialien erzeugt werden.

Gemäß einer weiteren beispielhaften Ausführungsform weist das Filterelement mindestens zwei Vlieslagen und eine, zwischen den Vlieslagen angeordnete Filtermembran auf, die schichtartig übereinander in einem Schichtverbund angeordnet sind, wobei insbesondere die mittlere Filtermembran des Schichtverbunds eine größere Oberfläche als die beiden äußeren Vlieslagen aufweist.

Gemäß einer weiteren beispielhaften Ausführungsform spannen eine erste Richtung und eine zweite Richtung eine Ebene auf, wobei die mittlere Filtermembran derart mit Wellenabschnitten gewellt ausgebildet ist, dass die Wellenabschnitte entlang einer ersten Richtung hintereinander angerordnet sind. Die Wellenabschnitte verlaufen insbesondere innerhalb der Ebene unregelmäßig und asymmetrisch zueinander. Das Filterelement ist derart angeordnet, dass das Filterelement entlang der ersten Richtung oder entlang der zweiten Richtung mit Luft überströmbar ist.

Beispielsweise ist die x-Richtung die Luftanströmungsrichtung der Luft und die Wellenabschnitte verlaufen quer zur ersten Richtung entlang der zweiten Richtung. Die Asymmetrie der Wellenanordnung und -form kann zur Schwingungsdämpfung genutzt werden. Alternativ kann der Filterkörper auch in Y- Richtung und somit parallel zur Erstreckung der Wellen angeströmt werden. Die Wellenabschnitte bilden damit beispielsweise eine haihautartige Ribletstruktur aus, welche eine Reduktion des Strömungswiderstandes bewirkt. Je nach Eintrittsverhältnissen (Einströmungsquerschnitt, Volumenstrom, Tiefe des zu durchströmenden Filtermaterials) in das Filterelement kann die eine oder andere Ausgestaltung von besonderem Vorteil sein. Die Asymmetrie der Wellenanordnung kann durch einen selbstorganisierenden Verdichtungsprozess erreicht werden, bei welchem die Vorschubgeschwindigkeit der Filtermembran deutlich höher als die Vorschubgeschwindigkeit der beiden Deckvliese ist. Durch thermische Fixierung der drei Lagen zu einem vorbestimmten Zeitpunkt entsteht die Asymmetrie der Wellenanordnung. Nebst den bereits beschriebenen Vorteilen wirkt diese Asymmetrie stabilisierend auf Durchbiegungen in der x-y Ebene.

Die Filtermembran wird in einer Wellenform angehäuft und zur Stabilisierung oben und unten mit einem Deckvlies verbunden (verklebt, verschweißt, geheftet, usw.) Dadurch wird sichergestellt, dass während der Lebensdauer des Filterelements genügend offene Membrangereich zur Verfügung stehen, und sich diese nicht flachlegen oder bei Belegung umfalten und so den Durchlass zusätzlich reduzieren.

Gemäß einer weiteren beispielhaften Ausführungsform weist das Filterelement eine Dicke von 2 mm bis 10 mm, insbesondere von 3 mm bis 7 mm auf, und/oder die Anzahl Wellenabschnitte liegt zwischen 0,5 und 3 Wellen pro cm.

Dies erlaubt eine Filterleistung ähnlich einem HEPA-Filter, aber mit einem Druckabfall im Bereich eines normalen F7-Filters (d.h. innerhalb der Betriebsparameter der erfindungsgemäßen Lösung).

Gemäß einer weiteren beispielhaften Ausführungsform weist das Filterelement ein Filtermaterial auf, welches hydrophob ist und/oder eine Naturfaser oder ein Polyolefin, insbesondere ein Polypropylen, enthält, insbesondere, dass der Filter Zellulose, Baumwolle und/oder Hanf enthält. Wenn der zu filternde Luftstrom mit einer hohe Aerosollast belastet ist, können bekannte Filter zur schlagartigen Durchfeuchtung neigen. Dies kann einerseits statisch den Druckabfall über den Filter erhöhen, aber auch dynamisch durch die sehr schnell wechselnden Druckverhältnisse eine nachfolgende Volumenstromregelung mittels VAV im Sinne von deren Regelgeschwindigkeit überfordern. Die erfindungsgemäße Lösung kann durch eine geeignete Materialwahl des Filtermaterials dieses Problem lösen: Entweder wird ein hydrophobes Material (z.B. ein Polyolefin, insbesondere Polypropylen, das im Wesentlichen frei von polaren Gruppen ist) oder ein saugfähiges Material mit spezieller (zum Beispiel tiefer) Quellneigung (z.B. eine Naturfaser, insbesondere eine Zellulosefaser, Baumwolle oder Hanf) verwendet. So wird die Neigung des Zufüllens von Filteröffnungen mit mikro- oder nanoskalinen Wassertröpfchen reduziert. Es hat sich gezeigt, dass die fungiziden, viruziden und bakteriziden Eigenschaften von Hanf günstig sind und diesen zu einem idealen Filterbestandteil machen. Auch diese Reduktion des Druckabfalls führt zu weniger ortsinstabilen Messungen (d.h., dass bei kleinerem Druckabfall mehr Luft durchgesaugt wird und deshalb ein größeres Ortsabbild für die Messwerte relevant ist, als dies bei der Beurteilung als Verbund erwartet wird).

Gemäß einer weiteren beispielhaften Ausführungsform weist die Filtervorrichtung eine Wägeeinrichtung auf, welche eingerichtet ist zum Wiegen der Filterbelegung des Filterelements, insbesondere, dass eine Messwertverfälschung durch den Druck der durch die Filtervorrichtung strömenden Luft kompensierbar ist. Mit entsprechende Zusatzmechanismen kann eine Kompensation der Messwertverfälschung durch den Druck des Luftwiderstandes im Betrieb der Filtervorrichtung erreicht werden. Dies erlaubt auch das Feststellen einer hohen Filterbelegung des Filterelements für eine Betriebsart der Filtervorrichtung bei tiefem Volumenstrom, der bei üblichen Filterüberwachungen nicht zum Auslösen der Differenzdrucküberwachung des Filterelements führt. Insbesondere in sekundären Filteranlagen ist man bemüht, mit tiefen Druckdifferenzen zu arbeiten, damit der Lärmpegel tief bleibt. Dieses Detail erlaubt trotzt sehr tiefen Druckdifferenzen eine zuverlässige Messung der Filterbelegung. Insbesondere kann die Wägeeinrichtung im eingebauten Zustand des Filterelements in dem Gehäuse der Filtervorrichtung einen Bodenkontakt aufweisen und somit die Gewichtskraft des Filterelements zu dem Boden einleiten. Dadurch kann eine Gewichtsmessung des Filterelements durchgeführt werden.

Gemäß einer weiteren beispielhaften Ausführungsform weist die Filtervorrichtung eine elektrische Versorgungseinheit auf, welche konfiguriert ist mittels des Luftstroms durch die Filtervorrichtung und/oder durch elektromagnetische Wellen Energie zu gewinnen, welche insbesondere zum Betrieb der Sensor- und/oder der Filtervorrichtung genutzt wird. Es kann sinnvoll sein, dass die Sensorik energiemäßig autonom gestaltet ist, so dass das Filtersystem Messdaten erhält, oder solche angezeigt werden können in Zeiten, ich welchem die sekundäre Filteranlage bzw. die Filtervorrichtung außer Betrieb ist. Dies kann sowohl mittels einer Livetime-Batterie oder mittels einer Versorgung durch Energieharvesting realisiert werden. Dabei ist es sinnvoll, möglichst energiesparende Sensorelemente einzusetzen. Zusätzlich kann der Energieverbrauch mit Ändern des Dutycycles reduziert werden, d.h. das Sensorelement wird nicht permanent, sondern zyklisch nur während einem 1/10 oder 1/100 (oder noch kürzere Messintervalle) der Zeit betrieben. Wenn die Messgeschwindigkeit des Sensorelements hoch (also die Zeit für eine Messung kurz) ist, findet wegen der Trägheit bezüglich Veränderungen in der Luftstromzusammensetzung dennoch eine genaue oder gar hochgenaue Messung statt. Energiesparende Sensorelemente sind zunehmend immer kleiner, was wiederum zu Schwierigkeiten bei der Platzierung im Luftstrom und der Sicherstellung der gezielten Umströmung führt. Diese zunehmend miniaturisierten Sensorelemente erlauben es zwei, drei oder mehr als 3 unterschiedliche Sensorelemente in der Filtervorrichtung zu integrierten.

Insbesondere hat sich gezeigt, dass die Verwendung von Kombisensoren, welche mehrere Luftparameter mit einen Sensorelement ermitteln von besonderem Vorteil sind, weil dafür nur die Luftstromkontinuität an einem spezifischen Ort sichergestellt werden muss, und mit diesem Aufwand stehen dann mehrere Luftparameter zur Verfügung. Eine solche autonome Lösung ist insbesondere auch für das Retrofit von bestehenden Filtervorrichtungen oder die Ergänzung von fremden Filtersystemen von Vorteil.

Die elektrische Versorgungseinheit kann konfiguriert sein mittels des Luftstroms durch das Filtermodul und/oder durch elektromagnetische Wellen Energie zu gewinnen, welche insbesondere zum Betrieb des Sensorelements genutzt wird. Beispielsweise kann über den Druckunterschied über dem Filterelement z.B. mittels eines Propellers, galloping harvester, piezoelectric flags (Piezoelements) und/oder durch Empfang und Gleichrichtung einer hochfrequenten Schwingung (z.B. von einem WLAN-Router) Energie gewonnen werden. Diese wird für den Betrieb der Sensorelemente verwendet.

Gemäß einer weiteren beispielhaften Ausführungsform weist das Filtersystem eine Datenspeichereinheit auf, welche mit der Steuereinheit, mit der Filtervorrichtung und mit dem weiteren Sensorelement zum Austausch von Daten gekoppelt ist. Insbesondere sind die Daten mittels eines Zertifikates und/oder einer Verschlüsselung schützbar, wobei insbesondere die Daten Messwerte darstellen, ausgewählt aus der Gruppe bestehend aus Luftdurchsatz durch die Filtervorrichtung, Lufttemperatur, Luftdruck, insbesondere Absolutdruck und/oder Differenzdruck, Filterbelegung des Filterelements, Luftfeuchtigkeit, Aerosolbelastung, PM-Gehalt und/oder Fremdstoffanteil der Luft, Messort der Luftmessung. Gerade bei besonders anspruchsvollen Betriebsbedingungen kann es von Interesse sein, dass einzelne Erfassungsdetails gespeichert und parametrisiert werden können. Zum einen betrifft dies Details des Messverfahrens, zum anderen auch Details über den Aufgezeichneten Luftparameter oder Filtervorrichtungsparameter (z.B. Luftdurchsatz, Temperatur, Druck (insbesondere Absolutdruck und/oder Differenzdruck), Filterbelegung, Feuchtigkeit, Aerosolbelastung, PM-Gehalt [insbesondere auch wieviel von welcher Durchmesserklasse]. Ein solcher Datensatz kann dann wiederum mittels einer Kommunikation übertragen werden, oder erst nach Ende der Filterlebenszeit ausgelesen werden.

Gemäß einer weiteren beispielhaften Ausführungsform ist das Sensorelement ein Staudruckmesser und insbesondere derart ausgebildet, dass ein statischer Druck stromaufwärts vor dem Filterelement und ein statischer und dynamischer Druck stromabwärts nach dem Filterelement messbar ist. Wenn die Geschwindigkeit des Luftflusses hoch genug ist, dann kann der Differenzdruck zwischen einem normalen Druckabgriff stromaufwärts vor dem Filterkörper und einem Staudruckrohr (oder Pitot-Rohr) stromabwärts hinter dem Filter gemessen werden. Der Druck beim Pitot-Rohr ist gegeben durch die Summe des statischen Drucks und des Staudrucks und ist deshalb höher als beim normalen Druckabgriff vor dem Filter. Diese Konfiguration kreiert einen invertierten oder negativen Differenzdruck über den Filter und erlaubt es verstopfte Zuleitungen oder Klappenstörungen zu detektieren. Insbesondere für die Nachrüstung von älteren Anlagen kann diese Ausführungsform geeignet sein. Durch die Verwendung eines Kontrollers im Filtermodul oder Filtersystem wird es möglich die Ansprech- und/oder Grenzwerte im Filtersystem von außen zu parametrieren.

Das Sensorelement kann beispielsweise ein Mikrophon aufweisen und den Geräuschpegel im Raum sowie insbesondere den Ort der Geräuschquelle detektieren. Durch Messung und Bewertung des Geräuschpegels in einem Raum kann auf Anzahl und Intensität von sprechaktiven Personen im Raum geschlossen werden und die Lüftungsleistung der Lüftereinheit über die Steuereinheit daran angepasst werden, da der Ausstoß von Aerosolen durch Personen mit der Sprachlautstärke ansteigt. Mit anderen Worten kann somit die Regelung der Lüftungsleistung über den Geräuschpegel im Raum eingestellt werden. Je mehr Personen sprechen, bzw. laut sprechen, desto mehr Aerosole werden ausgestoßen und desto höher kann die Lüfterleistung sein, da dann z.B. der zusätzliche Schall der Geräte, wie z.B. der Lüftereinheit nicht wahrgenommen wird und nicht stört. Sitzt eine oder mehrere Personen still im Raum geht die Lüftungsleistung runter, weil es leise sein muss zum konzentrierten Arbeiten, wobei aber auch kaum Aerosole ausgestoßen werden.

Gemäß einem weiteren Aspekt wird ein Gebäude beschreiben mit einer Vielzahl an Räumen und einem oben beschriebenen Filtersystem. Das Filtersystem weist eine zentrale Lüftungsanlage (primäre Lüftungsanlage) auf, welche zumindest eine weitere Lüftereinheit und jeweils einen Lüftungsausgang in den entsprechenden Räumen aufweist. Die Steuereinheit ist konfiguriert die weitere Lüftereinheit zu steuern, wobei die Steuereinheit basierend auf dem Raumzustand und/oder dem Filterzustand die Filtervorrichtung und/oder die zentrale Lüftungsanlage steuert.

Zusammenfassend kann insbesondere mittels der Steuereinheit eine Interaktion von sekundären Lüftungsgeräten, wie der Filtervorrichtung, bereitgestellt werden zur Optimierung des Energieverbrauchs, der Aerosolabreicherung, der Betriebskosten oder des CO2-Abdruckes des Filtersystems bereitgestellt werden. Auch eine darauf basierende Empfehlung zum Filterwechsel aus Umweltschutzüberlegungen anstelle der Entscheidung auf Basis der reinen Filterbelegung oder Betriebszeit kann mit der erfindungsgemäßen Lösung bereitgestellt werden.

Eine Steuerung einer Sekundärlüftung bzw. der Filtervorrichtung mittels der Steuereinheit, kann lokale Systembelastungen und lokale Geräuschemissionen durch Kommunikation mit anderen Filtervorrichtungen des Filtersystems (zum Beispiel einer weiteren Filtervorrichtung oder einer primären Filtereinheit) derart berücksichtigen, dass trotz hoher Luftabreinigung der Geräuschpegel reduziert wird. Auch kann mittels der Steuereinheit und mittels der getrennten örtlichen Anordnung des Sensorelements und des weiteren Sensorelements eine Visualisierung der ortsabhängigen Luftbelastung im Raum auf Basis der Kombination von Messwerten der Luftparameter von sekundären/primären Lüftungsvorrichtungen ermöglicht werden.

Die vorliegende Erfindung betrifft z.B. eine sekundäre Filtervorrichtung, welche mit anderen Filtervorrichtungen (andere primäre und sekundäre Filteranlagen, Anzeigesysteme, Steuerungen) kommuniziert und aufgrund von Messdaten bezüglich Luft- und Filterbelastung Informationen elektronisch oder visuell zur Verfügung stellt, Maßnahmen vorschlägt oder automatisch Maßnahmen ausführt.

Normalerweise zeigen sekundäre Lüftungsvorrichtungen nur die Luftparameter oder die Filtervorrichtungsparameter an. Gerade bei der Interaktion von mehreren solcher Filtervorrichtungen ist es erfindungsgemäß vorliegend, die Filtervorrichtungen untereinander und/oder in Verbindung mit einer primären Filtervorrichtung zu vernetzen, sodass Optimierungen vorgenommen werden können, insbesondere automatisch. Erfindungsgemäß wird mit anderen Worten ein Filtersystem bereitgestellt, welches dezentrale Filtervorrichtungen (sekundäre Filtervorrichtungen) (insbesondere auch heterogene) im Verbund (insbesondere in Interaktion mit primären) Filtervorrichtung steuern, regeln oder visualisieren.

Erfindungsgemäß werden somit mehrere Filtervorrichtungen zur Luftreinigung koordiniert. Dies können primäre und sekundäre Filtervorrichtungen sein, wobei zumindest eine (sekundäre) Filtervorrichtung insbesondere für genau einen Ortsbereich präzise Messdaten bezüglich der Luftparameter im Raum liefern kann, wie die Luftqualität bzw. ergänzenden Messwerte in dem Bereich ist/sind. Dies ist vor allem dann von Vorteil, wenn innerhalb eines abgegrenzten Bereiches entschieden werden muss, welche Lüftungsmaßnahmen (allenfalls automatisch) zu bevorzugen sind.

Erfindungsgemäß können dabei verschiedene Lüftungsmaßnahmen getroffen werden, um folgende Ziele zu erreichen, wie zum Beispiel
- Aerosolabreicherung bis zu einem bestimmten Level
- CO2-Reduktion
- Energieoptimierung einzelner Filtervorrichtungen oder des ganzen Filtersystems
- Reduktion des CO2-Footprintes eines Filtersystems
- Empfehlungen zum Filterwechsel
- Zeitliche Energieoptimierung (z.B. in Kooperation mit einem Demandesidemanagement bezüglich elektrischer Energieversorgung), insbesondere Steuerung/Berücksichtigung von Maximallast, Maximalenergieverbrauch, Bandenergie, Ladung und Rückspeisung von eMobilen am Gebäude usw.
- Reduktion Akustischer Störgeräusche
- Anpassung der Lüftungsleistung an den Geräuschpegel im Raum
- Optimierung der Betriebsparameter der Filtervorrichtungen unter Berücksichtigung der grauen Energie, welche für installierte Hardware und Verbrauchsmaterial benötigt wird oder wurde.
- Priorisierung und Kombination von Zielwerten, allenfalls gewichtet nach Wichtigkeit oder mit Festlegen einer oder mehrerer Zielbandbreiten (Empfehlungen zum Filterwechsel, basieren auf Expositionsdetails und weiteren Parametern wie CO-Footprint, minimale Luftqualität, usw.)

Die Steuereinheit kann basierend auf den örtlich gemessenen Luftparametern die Filtervorrichtungen derart steuern, dass folgende Handlungsoptionen umgesetzt werden können:
- Automatisch mehr ,lüften' in belegten Sitzungszimmern bzw. Räumen. Wenn in einem Raum eine Filtervorrichtung als sekundäre Filteranlage installiert ist, kann eine Optimierung bezüglich mehrerer Zielwerte bzw. Luftparameter optimiert werden.
- Eine Filtervorrichtung als primäres Filtersystem kann eine integrierte Kühlanlage aufweisen (zentrale Klimaanlage) und mittels der Steuereinheit leistungsmäßig reduziert werden, währenddessen eine weitere Filtervorrichtung als sekundäre Filtervorrichtung in einem Raum vermehrt aktiviert wird. Dies führt zu einer Energieeinsparung, ohne die Raumluftqualität zu verschlechtern (oder umgekehrt, wenn das sekundäre Filtersystem kühlfähig ist).
- Bei hohen Außenlufttemperaturen kann die Raumtemperatur durch Außenluftzuführung der Filtervorrichtung als primären Filteranlage über eine Wohlfühltemperatur im Raum erhöht werden. Dem kann automatisch entgegengewirkt werden, indem die außenluftzuführende primäre Filtervorrichtung gedrosselt wird, und die sekundären Filtervorrichtung werden im Umluftbetrieb in den einzelnen Räumen vermehrt aktiviert werden (insbesondere in Schul(ungs)- und/oder Sitzungszimmern).
- Realisierung von Zielvorgaben (z.B. durch lernende Systeme) unter Berücksichtigung von abgespeicherten historischen Messdaten der Sensorelemente (z.B. ,wenn die erste Ableitung des CO2-Pegels als Luftparameter eine gewisse Größe hat, kann zeitnah mit einem zu hohen CO2-Pegel gerechnet werden, wodurch ein präventives Hochfahren der Filtervorrichtungen mittels der Steuereinheit eingeleitet werden kann, um dann während der hohen Belastung mit CO2 im Raum keine übermäßige maximale Lüftungsbetrieb der Lüftereinheit zu benötigen und entsprechend einen tieferen Lärmpegel im Raum zu haben).
- Bei vielen belegten Schul(ungs)- und/oder Sitzungszimmern kann es energetisch besser sein, die primäre Filtervorrichtung, beispielsweise eine zentrale Filteranlage (RLT) hochzufahren, als alle sekundären Filtervorrichtungen hochzufahren, da eine zentrale Lüftungsanlage (bei entsprechender Auslegung) aufgrund der größeren Lüfter energieeffizienter arbeiten kann.
- Mittels der Steuereinheit und der Verarbeitung der Daten der Sensorelemente können Permanente und kontinuierliche Optimierung von Energieverbrauch und CO2-Footprint, zum Beispiel in Echtzeit, durchgeführt werden. So kann es zum Beispiel von Vorteil sein, ein Filterelement vor 'end of life' zu tauschen, da durch die Filterbelegung im Rahmen der Lebenszeit sich ein exponentiell steigender Druckabfall über das Filterelement einstellt. Je nach Energiekosten oder Anforderungen an den CO2-Footprint des Filtersystems kann ein Filterwechsel vor dem steilen Ansteigen des Differenzdrucks noch innerhalb der Lebensspanne des Filterelements eine Kosten- oder Ergebnisverbesserung beinhalten.

Ferner umfasst das erfindungsgemäße Filtersystem eine Ausführungsform, in welcher beispielsweise auch nur zwei sekundäre Filtervorrichtungen in einem Raum (z.B. Sitzungszimmer) angeordnet werden, wenn durch die Kommunikation der Messwerte der Luftparameter oder der Filtervorrichtungsparameter dieser Filtervorrichtungen mittels der Steuereinheit eine Lüfterleistung erhöht oder reduziert wird. Insbesondere bei Vorliegen von mehreren ortsaufgelösten Messwerten kann eine Messwertdarstellung, z.B. als Heatmap, erfolgen. Dies erlaubt auch Rückschlüsse auf lokale Quellen von Emissionen wie z.B. Feinstaub.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine schematische Darstellung eines Raumes eines Gebäudes mit einem Filtersystem gemäß einer beispielhaften Ausführungsform der vorliegenden Erfindung.
Fig. 2 zeigt eine schematische Darstellung eines Gebäudes mit zwei Räumen und einem Filtersystem gemäß einer beispielhaften Ausführungsform der vorliegenden Erfindung.
Fig. 3 zeigt eine schematische Darstellung einer Aerosolverteilung in einem Raum eines Gebäudes mit einem Filtersystem gemäß einer beispielhaften Ausführungsform der vorliegenden Erfindung.
Fig. 4 zeigt eine schematische Darstellung eines Filterelements mit einem Staudruckmesser gemäß einer beispielhaften Ausführungsform.
Fig. 5 zeigt eine schematische Darstellung eines Filtermaterials für das Filterelement gemäß einer beispielhaften Ausführungsform.
Fig. 6 zeigt eine schematische Darstellung von Wellenformen des Filtermaterials gemäß einer beispielhaften Ausführungsform.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

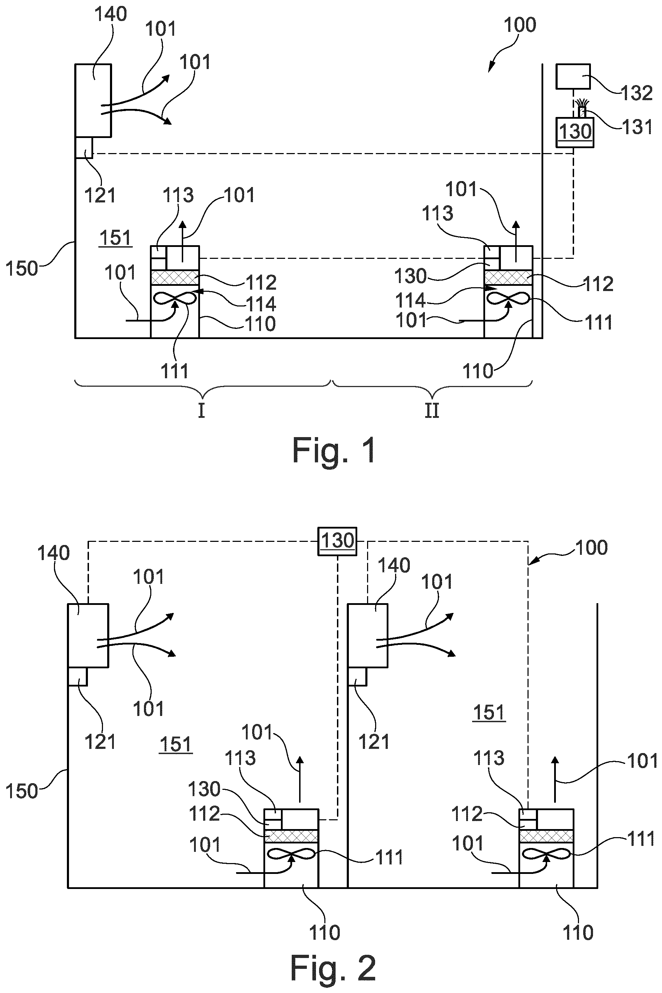

**Fig. 1** zeigt einen Raum 151 eines Gebäudes 151 mit einem Filtersystem 100 zur Filterung von Luft 101 in Räumen 151 eines Gebäudes 150. Das Filtersystem 100 weist eine Filtervorrichtung 110 aufweisend eine Lüftereinheit 111 und ein Filterelement 112 auf, welche in einem Raum 151 platzierbar ist, wobei zu filternde Luft 101 mittels der Lüftereinheit 111 durch das Filterelement 112 zur Filterung strömbar ist. Die Filtervorrichtung 110 weist ein Sensorelement 113 auf zum Bestimmen zumindest eines Filtervorrichtungsparameters aufweisend zumindest einen Luftparameter der zu filternden Luft 101 an der Filtervorrichtung 110 oder einen Betriebsparameter der Filtervorrichtung 110. Ferner weist das Filtersystem 100 ein weiteres Sensorelement 121 auf, welches beabstandet von der Filtervorrichtung 110 platzierbar ist und zum Bestimmen zumindest eines weiteren Luftparameters der Luft 101 an dem weiteren Sensorelement 121 ausgebildet ist. Die Filtervorrichtung 110 weist ferner eine Steuereinheit 130 auf, welche mit der Filtervorrichtung 110 und mit dem weiteren Sensorelement 121 gekoppelt ist und konfiguriert ist, basierend auf dem Filtervorrichtungsparameter und dem weiteren Luftparameter zumindest einen Raumzustand oder einen Filterzustand zu bestimmen.

In dem gezeigten Ausführungsbeispiel aus Fig. 1 weist das Filtersystem 100 insbesondere Filtervorrichtungen 110 auf, welche als sekundäre Filteranlagen ausgebildet sind und beabstandet im Raum 151 angeordnet sind. Die Filtervorrichtungen 110 sind entsprechend an bestimmten Standorten im Raum 151 angeordnet und beispielsweise als mobile Filtervorrichtungen 110 ausgebildet.

Die jeweilige Filtervorrichtung 100 weist beispielsweise ein Gehäuse auf, in welchem ein Filterelement 112 angeordnet ist oder eine Vielzahl von Filterelementen 112 in Serie entlang der Strömungsrichtung der Luft 101 durch die Filtervorrichtung 100 oder parallel zur Strömungsrichtung angeordnet sind. Das Filterelement 112 kann austauschbar vorgesehen sein.

Die Lüftereinheit 111 der jeweiligen Filtervorrichtung 110 saugt insbesondere zu filternde Luft 101 in die Filtervorrichtung 110, sodass die Luft 101 durch das Filterelement 112 strömt.

Das Sensorelement 113 der jeweiligen Filtervorrichtung 100 ist konfiguriert zum Bestimmen zumindest eines Filtervorrichtungsparameters bestehend zumindest aus einen Luftparameter (z.B. CO- Gehalt, CO₂- Gehalt, rel. Luftfeuchtigkeit, Luftdruck, O₂-Gehalt) der zu filternden Luft 101 an der Filtervorrichtung und/oder einem Betriebsparameter der Filtervorrichtung 110 (z.B. Stromverbrauch, Luftdurchsatz, Lautstärke etc.). Das Sensorelement 113 kann dabei stromaufwärts vor dem Filterelement 112 angeordnet werden, um den Luftparameter vor der Filterung zu messen. Zusätzlich oder alternativ kann das Sensorelement 113 nach dem Filterelement 112 angeordnet werden, um den Luftparameter nach der Filterung zu messen.

Entsprechend kann das weitere Sensorelement 121 wie das oben beschriebene Sensorelement 113 ausgebildet werden. Das weitere Sensorelement 121 ist insbesondere beabstandet von den sekundären Filtervorrichtungen 110 platzierbar, und zum Bestimmen zumindest eines weiteren Luftparameters (z.B. CO- Gehalt, CO₂- Gehalt, rel. Luftfeuchtigkeit, Luftdruck, O₂-Gehalt) der Luft 101 ausgebildet.

Beispielsweise weist der Raum 151 einen Lufteinlass und/oder Luftauslass als Teil 140 einer primären Filtervorrichtung, beispielsweise einer Zentralfilteranlage auf. Das weitere Sensorelement 121 ist an dem Teil 140 der primären Filtervorrichtung angeordnet oder kann Teil einer weiteren sekundären Filtervorrichtung sein, um entsprechend die Luftparameter zu messen.

Ferner weist die Filtervorrichtung 110 bzw. das Filtersystem 100 die Steuereinheit 130 auf, welche mit den Filtervorrichtungen 110 und mit dem weiteren Sensorelement 121 gekoppelt ist und konfiguriert ist, basierend auf dem Filtervorrichtungsparameter (d.h. dem Luftparameter der zu filternden Luft 101 an der Filtervorrichtung 110 oder einen Betriebsparameter der Filtervorrichtung 110) und dem weiteren Luftparameter zumindest einen Raumzustand (z.B. CO₂-Raumverteilung, Fremdstoffanteil, Belegung durch Personen (Personen anwesend/keine Personen anwesend, Verteilung der Personen im Raum, Geräuschpegel im Raum, etc.) oder einen Filterzustand (z.B. Filterbelegungszustand, Informationen bzgl. Notwendigkeit eines Filteraustausches, Informationen bzgl. Notwendigkeit einer Lüfterwartung notwendig) zu bestimmen.

Aufgrund der räumlichen Beabstandung des Sensorelements 113 und des weiteren Sensorelements 121, kann beispielsweise eine örtliche Verteilung von Konzentrationen der Luftparameter festgestellt werden. Basierend darauf, kann die Steuereinheit 130 Aussagen treffen, beispielsweise der räumlichen Gruppierung von Personen oder Aussagen über das Vorhandensein und dem örtlichen Vorliegen eines Gefahrenherds.

Die Steuereinheit 130 ist in dem Ausführungsbeispiel aus Fig. 1 an einem zentralen Ort des Gebäudes 150 angeordnet. Die Steuereinheit 130 ist zum Steuern der jeweiligen Lüftereinheit 111 der Filtervorrichtungen 110 ausgebildet. Zusätzlich ist die Steuereinheit 130 mit der primären Filteranlage 140 des Gebäudes 150 gekoppelt, um die Belüftungsleistung bzw. die Filterleistung der primären Filteranlage 140 zu steuern.

Mit dem erfindungsgemäßen Filtersystem 100 und der getrennten Sensormessung des Sensorelements 113 und des weiteren Sensorelements 121 können aufgrund der dadurch bezogenen Filtervorrichtungsparameter der Filtervorrichtung 110 und der weiteren Luftparameter ein Raumzustand oder ein Filterzustand bestimmt werden, um dadurch erneut Informationen zu Steuerung des Gesamtsystems, einschließlich einer primären Filteranlage 140 und der Filtervorrichtungen 110, zu erlangen.

Diese Messwerte der Sensorelemente 113, 121 wie auch die Steuersignale für die Filtervorrichtungen 110, 140 können drahtlos oder drahtgebunden zwischen der Steuereinheit 130 übertragen werden.

Mittels den Sensordaten der Sensorelemente 113, 121 kann die Steuereinheit den Raumzustand zu bestimmen, welcher aus der Gruppe bestehend aus einer CO2-Verteilung oder Fremdstoffverteilung im Raum 151, eine Anwesenheit von Personen im Raum 151, einer Personenbelegung im Raum 151, Geräuschpegel im Raum 151, einer Verteilung der Personen im Raum 151, ein Vorhandensein und/oder einer Position einer Gefahrenquelle, insbesondere einer Feuerquelle, einer Aerosolkonzentration, einer Feinstaubkonzentration und/oder einer Virenkonzentration, im Raum 151 ausgewählt ist.

Die Steuereinheit 130 weist ein Anzeigeelement 131 zum Anzeigen des Raumzustands und/oder des Filterzustands auf. Das Anzeigeelement 131 kann beispielsweise aus optischen Anzeigeelementen bestehen, wie beispielsweise LEDs, welche mittels eines bestimmten Farbtons den Raumzustand oder den Filterzustand anzeigen.

Basierend auf den gemessenen Luftparametern kann die Steuereinheit 130 beispielsweise auch die zentrale Lüftungsanlage 140 ansteuern, um zusammen mit den lokalen, im Raum befindlichen Filtervorrichtungen 110 die gewünschten Luftparameter einzustellen. An mehreren Orten im Raum 151 können entsprechende Luftparameter gemessen werden, um insbesondere den gesamten Raum 151 als Messgebiet abzudecken. Entsprechend kann eine sichere Aussage über das Überschreiten einzelner Grenzwerte von Luftparametern im Raum 151 getroffen werden.

Die Steuereinheit 130 ist entsprechend konfiguriert, die Positionsdaten der Filtervorrichtungen 110 und/oder des weiteren Sensorelements 121 (bzw. der zentralen Lüftungsanlage 140) zu bestimmen (beispielsweise mittels eines GPS-Sensors oder mittels Ortung der Anschlussstelle (Steckdose) der entsprechenden zentrale Lüftungsanlage 140 im Raum 151) und/oder vorkonfigurierte Positionsdaten zu berücksichtigen.

Die Steuereinheit 130 kann die Filtervorrichtungen 110 und die zentrale Lüftungsanlage 140 steuern. So kann beispielsweise in einem Raum 151 eine Vielzahl von örtlichen (mobilen), sekundären Filtervorrichtung 110 installiert werden und zusätzlich in dem Raum 151 eine weitere Filtervorrichtung als Teil 140 einer primären zentralen Lüftungsanlage vorgesehen sein. Basierend auf den entsprechenden gemessenen positionsbezogenen Luftparameter kann die Steuereinheit 130 individuell alle Filtervorrichtungen, sowohl die sekundären Filtervorrichtungen 110 als auch die primäre Filtervorrichtung 140, steuern.

Die entsprechende Filtervorrichtung 110 weist eine Wägeeinrichtung 114 auf, welche eingerichtet ist zum Wiegen der Filterbelegung des Filterelements 112, insbesondere, dass eine Messwertverfälschung durch den Druck, der durch die Filtervorrichtung 110 strömenden Luft kompensierbar ist. Mit entsprechende Zusatzmechanismen kann eine Kompensation der Messwertverfälschung durch den Druck des Luftwiderstandes im Betrieb der Filtervorrichtung 110 erreicht werden. Dies erlaubt auch das Feststellen einer hohen Filterbelegung des Filterelements 112 für eine Betriebsart der Filtervorrichtung bei tiefem Volumenstrom, der bei üblichen Filterüberwachungen nicht zum Auslösen der Differenzdrucküberwachung des Filterelements 112 führt.

Das Filtersystem 100 weist ferner eine Datenspeichereinheit 132 auf, welche mit der Steuereinheit 130, mit der jeweiligen Filtervorrichtung 110 und mit dem weiteren Sensorelement 121 zum Austausch von Daten gekoppelt ist.

**Fig. 2** zeigt eine schematische Darstellung eines Gebäudes 150 mit zwei Räumen 151 und einem Filtersystem 100 gemäß einer beispielhaften Ausführungsform der vorliegenden Erfindung. Das Filtersystem 100 aus Fig. 2 weist dieselben Merkmale wie das Filtersystem 100 aus Fig. 1 auf, wobei die Steuereinheit 130 Messwerte aus Sensorelementen 113, 121 aus einem Raum 151 und entsprechende Messwerte aus Sensorelementen 113, 121 aus einem anderen Raum 151 bezieht. Entsprechend können Luftparameter aus mehreren Räumen 151 eines Gebäudes 150 festgestellt bzw. gemessen werden. Steigt beispielsweise in einem Raum 151 der CO2 Gehalt im Vergleich zu einem anderen Raum 151, so kann beispielsweise die Belegung des Raumes 151 mit Personen festgestellt werden. Entsprechend kann beispielsweise die primäre Lüftungsanlage 140 (beispielsweise die zentrale Lüftungsanlage) oder die einzelne Filtervorrichtungen 110 in einem der Räume 151 gesteuert werden, um den gewünschten Raumzustand in einem Raum 151 herzustellen. Aufgrund der Kenntnis der Belegung des Raumes 151 über den Vergleich der CO2 Werte in den entsprechenden Räumen 151, kann ferner ein digitaler Belegungsplan der Räume 151 Mittels der Steuereinheit 130 gesteuert werden.

Ein Gebäude 150 kann somit eine Vielzahl an Räumen 151 und einem oben beschriebenen Filtersystem 100 aufweisen. Das Filtersystem 100 weist eine zentrale Lüftungsanlage 140 (primäre Lüftungsanlage) auf, welche zumindest eine weitere Lüftereinheit und jeweils einen Lüftungsausgang in den entsprechenden Räumen 151 aufweist. Die Steuereinheit 130 ist konfiguriert die weitere Lüftereinheit zu steuern, wobei die Steuereinheit 130 basierend auf dem Raumzustand und/oder dem Filterzustand die Filtervorrichtung 110 und/oder die zentrale Lüftungsanlage 140 steuert.

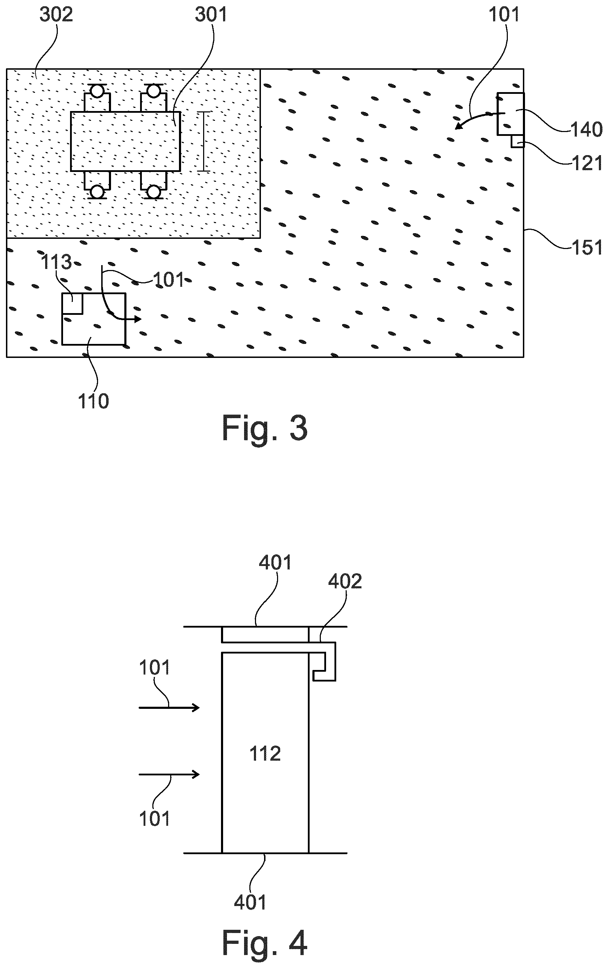

**Fig. 3** zeigt eine schematische Darstellung einer Aerosolverteilung in einem Raum 151 eines Gebäudes 150 mit einem Filtersystem 100 gemäß einer beispielhaften Ausführungsform der vorliegenden Erfindung.

Aufgrund der räumlichen Beabstandung des Sensorelements 113 und des weiteren Sensorelements 121, kann beispielsweise eine örtliche Verteilung von Konzentrationen der Luftparameter festgestellt werden. Basierend darauf, kann die Steuereinheit 130 Aussagen treffen, beispielsweise der räumlichen Gruppierung von Personen oder Aussagen über das Vorhandensein und dem örtlichen Vorliegen eines Gefahrenherds. In dem gezeigten Beispiel wird die Aerosolkonzentration 302 als Luftparameter dargestellt. In einem ersten Raumbereich I, in welchem ein Konferenztisch 301 angeordnet ist, befindet sich eine höhere Dichte an Personen, während in einem zweiten Raumbereich II sich keine Personen aufhalten. Die Konzentration der Personen in dem ersten Raumbereich I wird beispielsweise durch die Messung der Aerosolkonzentration mittels des Sensorelements 113 und des weiteren Sensorelements 121 festgestellt. Dabei muss sich die Filtervorrichtung 110 nicht im ersten Raumbereich I selbst befinden. Aufgrund der Positionsdaten der Filtervorrichtung 110 ist bekannt, dass sich diese näher an dem ersten Raumbereich I befindet als der weitere Sensor 121, beispielsweise in einem Teil 140 einer Zentralfilteranlage. Ferner ist beispielsweise bekannt, dass die Filtervorrichtung 110 die Luft 101 aus einer bestimmten Ansaugrichtung, welche in Richtung des ersten Raumbereichs I zeigt, eingesaugt wird. Basierend auf diesen Parametern und Daten kann die Steuereinheit 130 eine entsprechende Verteilung der Aerosolkonzentration 302 im Raum 151 feststellen.

Ferner kann das Anzeigeelement 131 ein grafisches Display, insbesondere ein berührungssensitives Display (Touch Display), ausbilden. Auf dem grafischen Display wird eine Abbildung des Raumes 151 dargestellt und entsprechende Raumbereiche I, II, in welchen ein bestimmter Raumzustand oder ein Filterzustand vorliegt, dargestellt. So kann beispielsweise der Raumbereich I graphisch dargestellt werden, in welchen eine hohe Aerosolbelastung vorliegt und ein anderer Raumbereich II, in welchen eine geringere Aerosolbelastung vorliegt.

Die Steuereinheit 130 kann somit basierend auf den gemessenen Luftparametern der entsprechenden Filtervorrichtungen 110, 140 den Raumzustand des Raumes 151 ortsabhängig anzeigen. So kann beispielsweise gezielt eine Raumkarte erstellt werden, in welchem die einzelnen Konzentrationen der gewählten Luftparameter dargestellt werden. Basierend darauf die Steuereinheit 130 die einzelnen Filtervorrichtungen 110, 140 einzeln steuern, um basierend auf deren Filterleistung die gewünschte Konzentration der Luftparameter in einem Raum 151 einzustellen.

In Fig. 3 wird beispielhaft die Aerosolverteilung als Luftparameter herangezogen. Erfindungsgemäß können eine Vielzahl anderer Luftparameter herangezogen werden, die ortsabhängig mittels der Steuereinheit 130 graphisch dargestellt werden können und basierend darauf die Filtervorrichtungen 110, 140 gesteuert werden kann.

**Fig. 4** zeigt eine schematische Darstellung eines Filterelements 112 mit einem Staudruckmesser 402 als Sensorelement 113, 121 gemäß einer beispielhaften Ausführungsform. Der Staudruckmesser 402 ist derart ausgebildet, dass ein statischer Druck stromaufwärts vor dem Filterelement 112 und ein statischer und dynamischer Druck stromabwärts auf der Abluftseite nach dem Filterelement 112 messbar ist. Wenn die Geschwindigkeit des Luftflusses hoch genug ist, dann kann der Differenzdruck p1-p2 zwischen einem normalen Druckabgriff stromaufwärts vor dem Filterelement 112 (Druck p1) und einem Staudruckrohr (oder Pitot-Rohr) stromabwärts hinter dem Filterelement 112 (Druck p2) gemessen werden. Der Druck beim Pitot-Rohr ist gegeben durch die Summe des statischen Drucks und des Staudrucks und ist deshalb höher als beim normalen Druckabgriff vor dem Filterelement 112. Diese Konfiguration kreiert einen invertierten oder negativen Differenzdruck über dem Filterelement 112 und erlaubt es verstopfte Zuleitungen oder Klappenstörungen zu detektieren.

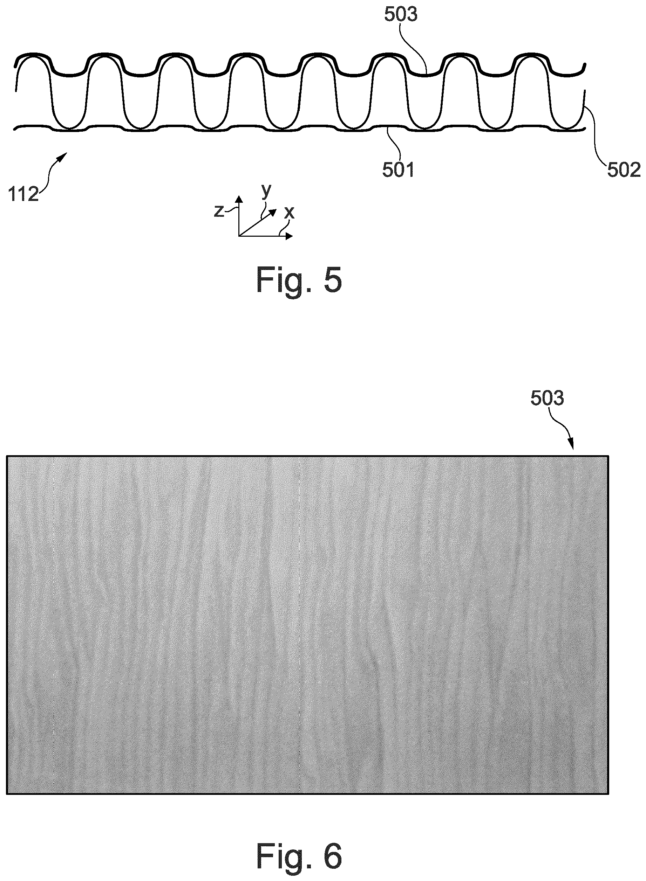

**Fig. 5** zeigt eine schematische Darstellung eines Filtermaterials für das Filterelement 112 gemäß einer beispielhaften Ausführungsform. Das Filterelement 112 weist insbesondere mehrere Filterlagen auf, welche in Strömungsrichtung der Luft 101 durch das Filterelement 112 hintereinander angeordnet sind, wobei insbesondere die der Zuluftseite zugewandte erste Filterschicht gröber filtert als zumindest eine der in Strömungsrichtung zu der nachfolgenden ersten Filterschicht nachfolgenden zweiten Filterschichten. Somit können zunächst gröbere Partikel gefiltert werden, während kleinere Partikel durch die ersten Schichten hindurchströmen und erst später bei den feinen Schichten ausgefiltert werden.

Der Filterkörper 112 weist mindestens zwei Vlieslagen 501, 503 und eine, zwischen den Vlieslagen 501, 503 angeordnete Filtermembran 502 auf, die schichtartig in einer dritten Richtung z übereinander in einem Schichtverbund angeordnet sind, wobei insbesondere die mittlere Filtermembran 502 des Schichtverbunds eine größere Oberfläche als die beiden äußeren Vlieslagen 501, 503 aufweist. Die mittlere Filtermembran 502 weist Wellenabschnitte auf, welche entlang einer ersten Richtung x hintereinander angeordnet sind.

Mit anderen Worten kann auf der Zuluftseite ein grobes Deckvlies als äußere Vlieslage 503 vorgesehen werden, welches insbesondere gewellt auf die Zuluftseite der Filtermembran 502 angeordnet ist. Ebenfalls kann auf der Abluftseite ein grobes Deckvlies als Vlieslage 501 auf die Abluftseite der Filtermembran 502 angeordnet werden. Die äußere Vlieslage 503 an der Zuluftseite ist dabei stärker gewellt als die äußere Vlieslage 501 an der Abluftseite. Die Filtermembran 502 ist dabei stark gewellt und entsprechend auch stark filternd ausgebildet. Der Zwischenbereich zwischen den äußeren Vlieslagen 501, 503 und den Wellen der Filtermembran 502 kann mit einem Filmmaterial gefüllt sein, um eine höhere Stabilität zu erzielen.

**Fig. 6** zeigt eine schematische Darstellung von Wellenformen des Filterelements 112 gemäß einer beispielhaften Ausführungsform.

Die Wellenabschnitte verlaufen insbesondere innerhalb der Ebene unregelmäßig und asymmetrisch zueinander. Das Filterelement 112 ist derart angeordnet, dass das Filterelement 112 entlang der ersten Richtung x oder entlang der zweiten Richtung y mit Luft 101 überströmbar ist. Beispielsweise ist die x-Richtung die Luftanströmungsrichtung der Luft 101 und die Wellenabschnitte verlaufen quer zur ersten Richtung x entlang der zweiten Richtung y. Die Asymmetrie der Wellenanordnung und -form kann zur Schwingungsdämpfung genutzt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

| | | | |
|---|---|---|---|
| 100 | Filtersystem | 501 | äußere Vlieslage |
| 101 | Luft, Luftstrom | 502 | Filtermembran |
| 110 | Filtervorrichtung/ Sekundäre Filteranlage | 503 | äußere Vlieslage |
| 111 | Lüftereinheit | | |
| 112 | Filterelement | x | erste Richtung |
| 113 | Sensorelement | y | zweite Richtung |
| 114 | Wägeeinrichtung | z | dritte Richtung |
| 121 | weiteres Sensorelement | | |
| 130 | Steuereinheit | I | erster Raumbereich |
| 131 | Anzeigeelement | II | zweiter Raumbereich |
| 132 | Datenspeichereinheit | | |
| 140 | Zentralfilteranlage/Primäre Filteranlage | | |
| 150 | Gebäude | | |
| 151 | Raum | | |
| 301 | Konferenztisch | | |
| 302 | Aerosolkonzentration | | |
| 401 | äußere Luftstrombegrenzung | | |
| 402 | Staudruckmesser | | |

## Patentansprüche

1. Filtersystem (100) zur Filterung von Luft (101) in Räumen (151) eines Gebäudes (150), das Filtersystem (100) aufweisend
eine Filtervorrichtung (110) aufweisend eine Lüftereinheit (111) und ein Filterelement (112), welche in einem Raum (151) platzierbar ist,
wobei zu filternde Luft (101) mittels der Lüftereinheit (111) durch das Filterelement (112) zur Filterung strömbar ist,
wobei die Filtervorrichtung (110) ein Sensorelement (113) zum Bestimmen zumindest eines Filtervorrichtungsparameters aufweisend zumindest einen Luftparameter der zu filternden Luft (101) an der Filtervorrichtung (110) oder einen Betriebsparameter der Filtervorrichtung (110) aufweist,
ein weiteres Sensorelement (121), welches beabstandet von der Filtervorrichtung (110) platzierbar ist, und zum Bestimmen zumindest eines weiteren Luftparameters an dem weiteren Sensorelement (121) ausgebildet ist;
eine Steuereinheit (130), welche mit der Filtervorrichtung (110) und mit dem weiteren Sensorelement (121) gekoppelt ist und konfiguriert ist, basierend auf dem Filtervorrichtungsparameter und dem weiteren Luftparameter zumindest einen Raumzustand oder einen Filterzustand zu bestimmen,
wobei die Steuereinheit (130) konfiguriert ist, die Positionsdaten der Filtervorrichtung (110) und/oder des weiteren Sensorelements (121) zu bestimmen und/oder vorkonfigurierte Positionsdaten derart zu berücksichtigen, dass mittels der Kenntnis der Positionsdaten des Sensorelements und des weiteren Sensorelements grafische Abbildungen eines Raumes mit entsprechenden örtlichen Konzentrationen von Luftparametern darstellbar sind.

2. Filtersystem (100) gemäß Anspruch 1,
wobei zumindest der Luftparameter oder der weitere Luftparameter ausgewählt ist aus der Gruppe bestehend aus dem CO-Gehalt, CO2-Gehalt, der rel. Luftfeuchtigkeit, dem Luftdruck, dem Sauerstoffgehalt, Strömungsgeschwindigkeit der Luft, dem Fremdstoffanteil aufweisend Fremdstoffpartikel, insbesondere dem Feinstaubgehalt, Partikelgröße der Fremdstoffpartikel, insbesondere dem Durchmesser der Fremdstoffpartikel, Fremdstoffpartikelart, dem Taupunkt und der Lufttemperatur, und/oder wobei zumindest der Betriebsparameter der Filtervorrichtung (110) ausgewählt ist aus der Gruppe bestehend aus dem Stromverbrauch der Filtervorrichtung (110), dem Luftdurchsatz durch das Filterelement (112), der Lautstärke der Lüftereinheit (111), der Strömungslautstärke der durchströmenden Luft (101) und der Temperatur der Lüftereinheit (111) und dem Druckabfall der durchströmenden Luft (101) über dem Filterelement (112).

3. Filtersystem (100) gemäß Anspruch 1 oder 2, aufweisend zumindest eines der folgenden Merkmale
wobei die Steuereinheit (130) konfiguriert ist zumindest den Filterzustand zu bestimmen, welcher aus der Gruppe bestehend aus einer Filterbelegung des Filterelements (112), einer Filteraustauschangabe und einer Lüfterwartungsangabe ausgewählt ist,
wobei die Steuereinheit (130) ein Anzeigeelement (131) zum Anzeigen des Raumzustands und/oder des Filterzustands aufweist, und
wobei das weitere Sensorelement (121) in demselben Raum (151) wie die Filtervorrichtung (110) angeordnet ist oder
wobei das weitere Sensorelement (121) in einem anderen Raum (151) als die Filtervorrichtung (110) angeordnet ist.

4. Filtersystem (100) gemäß einem der Ansprüche 1 bis 3, ferner aufweisend
eine weitere Filtervorrichtung (110) im Raum (151) beabstandet von Filtervorrichtung (110), wobei die weitere Filtervorrichtung (110) das weitere Sensorelement (121) aufweist.

5. Filtersystem (100) gemäß Anspruch 4,
wobei die weitere Filtervorrichtung (110) ein weiteres Filterelement (112) aufweist,
wobei die weitere Filtervorrichtung (110) insbesondere ein Teil (140) einer Zentralfilteranlage eines Gebäudes (150) ist, oder
wobei die weitere Filtervorrichtung (110) eine weitere Lüftereinheit (111) aufweist und insbesondere bewegbar ausgebildet ist.

6. Filtersystem (100) gemäß einem der Ansprüche 1 bis 5,
wobei die Steuereinheit (130) insbesondere konfiguriert ist basierend auf den Positionsdaten eine Wärmebildkarte, eine örtliches Verteilungsbild einer Gaskonzentration, insbesondere einer CO2-Konzentrationsverteilung oder O2-Konzentrationsverteilung, einer Personenverteilung, einer Geräuschpegelveränderung, einer Aerosolverteilung, einer Feuchtigkeitsverteilung, einer Virenverteilung, einer Feinstaubkonzentrationsverteilung.

7. Filtersystem (100) gemäß einem der Ansprüche 1 bis 6,
wobei die Steuereinheit (130) konfiguriert ist, basierend auf dem Raumzustand und/oder dem Filterzustand die Filtervorrichtung (110), insbesondere die Lüftereinheit (111), zu steuern,
wobei die Steuereinheit (130) insbesondere konfiguriert ist, die Filtervorrichtung (110), insbesondere die Lüftereinheit (111), derart variabel zu steuern, dass diese Variation das räumliche Absauggebiet verlagert, insbesondere, dass der Einfluss der Variation des Absauggebiets die Bestimmung des Raumzustands mitbestimmt.

8. Filtersystem (100) gemäß einem der Ansprüche 1 bis 7, aufweisend zumindest eines der folgenden Merkmale
wobei die Steuereinheit (130) konfiguriert ist, die Filtervorrichtung (110), insbesondere die Lüftereinheit (111), derart variabel zu steuern, dass eine zukünftige Energieverfügbarkeit und/oder der aktuelle und/oder zukünftige Energieverbrauch des Filtersystems (100) und/oder des Gebäudes (150) berücksichtigbar ist,
wobei die Steuereinheit (130) selbsttätig oder teilautomatisch mit Zustimmfunktion die Filtervorrichtung (110) basierend auf der zukünftigen Energieverfügbarkeit und/oder des aktuellen und/oder zukünftigen Energieverbrauchs des Filtersystems und/oder des Gebäudes (150) steuert und/oder innerhalb einem Vorgabebereich regelt,
wobei das Filterelement (112) derart ausgebildet ist, dass ein Druckabfall der durchströmenden Luft (101) durch das Filterelement (112) unter 450 Pa, insbesondere unter 250 Pa, weiter insbesondere unter 150 Pa liegt,
wobei die Filtervorrichtung (110) konfiguriert ist, dass ein Luftvolumen pro Stunde und Quadratmeter Filterfläche unter 600 m³/(m²xh), insbesondere unter 140 m³/(m²xh), unter 85 m³/(m²xh) oder unter 50 m³/(m²xh) liegt, und/oder die Geschwindigkeit des Volumenstroms der Luft (101) durch die Filtervorrichtung (110) im Bereich 0,1 bis 5 m/s liegt, insbesondere im Bereich 0,2 m/s bis 3,4 m/s, weiter insbesondere zwischen 0,3 m/s bis 2,8 m/s liegt,
wobei die Steuereinheit (130) von der Filtervorrichtung (110) und dem weiteren Sensorelement (121) getrennt angeordnet ist, und
wobei die Steuereinheit (130) konfiguriert ist, basierend auf dem bestimmten Raumzustand und/oder dem bestimmten Filterzustand einen Energieverbrauch der Filtervorrichtung (110) zu bestimmen, und/oder
wobei die Steuereinheit (130) konfiguriert ist, basierend auf dem bestimmten Raumzustand und/oder dem bestimmten Filterzustand Steuerdaten für die Filtervorrichtung (110), insbesondere für die Lüftereinheit (111), zu bestimmen und diese einem Benutzer anzuzeigen und/oder mittels den Steuerdaten zumindest eine Filtervorrichtung (110), bevorzugt mehrere, insbesondere alle Filtervorrichtungen (110) selbsttätig steuert.

9. Filtersystem (100) gemäß einem der Ansprüche 1 bis 8, aufweisend zumindest eines der folgenden Merkmale
wobei die Steuereinheit (130) konfiguriert ist, den Raumzustand basierend auf dem bestimmten Feinstaub als Luftparameter zu analysieren, insbesondere basierend auf der Häufigkeit des Auftretens des Feinstaubs, insbesondere einer Häufigkeit von Durchmesserklassen des Feinstaubs und/oder der Zusammensetzung des Feinstaubs, insbesondere in Echtzeit, zu analysieren, wobei die Steuereinheit (130) zum drahtlosen Signalaustausch von Sensorsignalen oder Steuerbefehlen mit der Filtervorrichtung (110) und/oder mit dem weiteren Sensorelement (121) gekoppelt ist,
wobei die Filtervorrichtung (110) filterbezogene Daten der Steuereinheit (130) zur Verfügung stellt, insbesondere mittels RFID, NFC, Bluetooth, WLAN oder Protokollen der Gebäudeleittechnik zur Verfügung stellt,
wobei die Steuereinheit (130) insbesondere konfiguriert ist, dass auf Basis der filterbezogenen Daten ein Warnsignal generierbar ist und/oder eine Maßnahme ergreifbar ist, welche einen Durchsatz durch die Filtervorrichtung (110) betrifft, und
wobei die Steuereinheit (130) von der Filtervorrichtung (110) eine UniqueID bezieht, wobei die Unique ID Informationen bezüglich des Einsatzorts des Filtervorrichtung (110) aufweist,
wobei die Steuereinrichtung die Unique ID via NFC, Bluetooth, WLAN, proprietären Protokollen oder Protokollen von Gebäudeleitsystemen, insbesondere LON oder EIB, empfängt,
wobei basierend auf der Unique ID der Betrieb und/oder die Konfiguration des Filtervorrichtung (110) einstellbar ist.

10. Filtersystem (100) gemäß einem der Ansprüche 1 bis 9,
wobei das Filterelement (112) ein Filtermaterial aufweist, welches eine Lage Vlies, insbesondere mehrere Lagen Vlies enthält,
wobei das Filterelement (112) austauschbar in der Filtervorrichtung (110) anordbar ist,
wobei insbesondere das Filterelement (112) ein Einwegfilter ist,
wobei das Filterelement (112) insbesondere mindestens zwei Vlieslagen (151, 153) und eine, zwischen den Vlieslagen (151, 153) angeordnete Filtermembran (152) aufweist, die schichtartig übereinander in einem Schichtverbund angeordnet sind,
wobei insbesondere die mittlere Filtermembran (152) des Schichtverbunds eine größere Oberfläche als die beiden äußeren Vlieslagen (151, 153) aufweist,
wobei eine erste Richtung (x) und eine zweite Richtung (y) eine Ebene aufspannen,
wobei die mittlere Filtermembran (152) insbesondere derart mit Wellenabschnitten gewellt ausgebildet ist, dass die Wellenabschnitte entlang einer ersten Richtung (x) hintereinander angerordnet sind,
wobei die Wellenabschnitte insbesondere innerhalb der Ebene unregelmäßig und asymmetrisch zueinander verlaufen, und
wobei das Filterelement (112) derart angeordnet ist, dass das Filterelement (112) entlang der ersten Richtung (x) oder entlang der zweiten Richtung (y) mit Luft (101) überströmbar ist.
dass das Filterelement (112) insbesondere eine Dicke von 2 mm bis 10 mm, insbesondere von 3 mm bis 7 mm aufweist, und/oder
wobei die Anzahl Wellenabschnitte insbesondere zwischen 0,5 und 3 Wellen pro cm liegt.

11. Filtersystem (100) gemäß einem der Ansprüche 1 bis 10, aufweisend zumindest eines der folgenden Merkmale
wobei das Filterelement (112) ein Filtermaterial aufweist, welches hydrophob ist und/oder, eine Naturfaser oder ein Polyolefin, insbesondere ein Polypropylen enthält, insbesondere, dass der Filter Zellulose, Baumwolle und/oder Hanf enthält,
wobei die Filtervorrichtung (110) eine Wägeeinrichtung (114) aufweist, welche eingerichtet ist zum Wiegen der Filterbelegung des Filterelements (111), insbesondere, dass eine Messwertverfälschung durch den Druck der durch die Filtervorrichtung (110) strömenden Luft (101) kompensierbar ist, und
wobei die Filtervorrichtung (110) eine elektrische Versorgungseinheit aufweist, welche konfiguriert ist mittels des Luftstroms durch die Filtervorrichtung (110) und/oder durch elektromagnetische Wellen Energie zu gewinnen, welche insbesondere zum Betrieb des Sensorelements (113, 121) und/oder der Filtervorrichtung (110) genutzt wird.

12. Filtersystem (100) gemäß einem der Ansprüche 1 bis 11, ferner aufweisend
eine Datenspeichereinheit (132), welche mit der Steuereinheit (130), mit der Filtervorrichtung (110) und mit dem weiteren Sensorelement (121) zum Austausch von Daten gekoppelt ist,
wobei insbesondere die Daten mittels eines Zertifikates und/oder einer Verschlüsselung schützbar sind,
wobei insbesondere die Daten Messwerte darstellen, ausgewählt aus der Gruppe bestehend aus Luftdurchsatz durch die Filtervorrichtung (110), Lufttemperatur, Luftdruck, insbesondere Absolutdruck und/oder Differenzdruck, Filterbelegung des Filterelements (112), Luftfeuchtigkeit, Aerosolbelastung, PM-Gehalt und/oder Fremdstoffanteil der Luft, Messort der Luftmessung.

13. Filtersystem (100) gemäß einem der Ansprüche 1 bis 12,
wobei das Sensorelement (113) ein Staudruckmesser (402) ist und insbesondere derart ausgebildet ist, dass ein statischer Druck stromaufwärts vor dem Filterelement (112) und ein statischer und dynamischer Druck stromabwärts nach dem Filterelement (112) messbar ist, und/oder
wobei das Sensorelement (113) ein Mikrophon aufweist, welches konfiguriert ist, den Geräuschpegel in einem Raum (151) derart zu detektieren, dass mittels Messung und Bewertung des Geräuschpegels in dem Raum (151) die Anzahl und Intensität von sprechaktiven Personen im Raum bestimmbar sind.

14. Gebäude (150), aufweisend,
eine Vielzahl an Räumen (151),
ein Filtersystem (100) gemäß einem der Ansprüche 1 bis 13,
wobei das Filtersystem (100) eine zentrale Lüftungsanlage aufweist, welche zumindest eine weitere Lüftereinheit (111) und jeweils einen Lüftungsausgang in den entsprechenden Räumen (151) aufweist,
wobei die Steuereinheit (130) konfiguriert ist die weitere Lüftereinheit (111) zu steuern,
wobei die Steuereinheit (130) basierend auf dem Raumzustand und/oder dem Filterzustand die Filtervorrichtung (110) und/oder die zentrale Lüftungsanlage steuert.

15. Verfahren zur Filterung von Luft (101) in Räumen (151) eines Gebäudes (150) mit einem Filtersystem (100) gemäß einem der Ansprüche 1 bis 13.

## Claims

1. A filter system (100) for filtering air (101) in rooms (151) of a building (150), the filter system (100) comprising
a filter device (110) comprising a fan unit (111) and a filter element (112) which can be placed in a room (151),
wherein air (101) to be filtered can be flowed through the filter element (112) for filtering by means of the fan unit (111),
wherein the filter device (110) comprises a sensor element (113) for determining at least one filter device parameter comprising at least one air parameter of the air (101) to be filtered at the filter device (110) or an operating parameter of the filter device (110),
a further sensor element (121) which can be placed at a distance from the filter device (110) and is configured to determine at least one further air parameter at the further sensor element (121);
a control unit (130) which is coupled to the filter device (110) and to the further sensor element (121) and is configured to determine at least one room state or a filter state based on the filter device parameter and the further air parameter,
wherein the control unit (130) is configured to determine the position data of the filter device (110) and/or of the further sensor element (121) and/or to take preconfigured position data into account such that graphical images of a room with corresponding local concentrations of air parameters can be represented by means of the knowledge of the position data of the sensor element and of the further sensor element.

2. The filter system (100) according to claim 1,
wherein at least the air parameter or the further air parameter is selected from the group consisting of the CO content, CO2 content, the rel. air humidity, the air pressure, the oxygen content, the flow velocity of the air, the foreign matter content comprising foreign matter particles, in particular the fine dust content, particle size of the foreign matter particles, in particular the diameter of the foreign matter particles, foreign matter particle type, the dew point and the air temperature, and/or
wherein at least the operating parameter of the filter device (110) is selected from the group consisting of the power consumption of the filter device (110), the air throughput through the filter element (112), the sound level of the fan unit (111), the flow sound level of the air (101) flowing through and the temperature of the fan unit (111) and the pressure drop of the air (101) flowing through above the filter element (112).

3. The filter system (100) according to claim 1 or 2, comprising at least one of the following features
wherein the control unit (130) is configured to determine at least the filter state which is selected from the group consisting of a filter occupancy of the filter element (112), a filter replacement indication and a ventilation expectation indication,
wherein the control unit (130) comprises a display element (131) for displaying the room state and/or the filter state, and
wherein the further sensor element (121) is arranged in the same room (151) as the filter device (110) or
wherein the further sensor element (121) is arranged in a different room (151) than the filter device (110).

4. The filter system (100) according to one of the claims 1 to 3, further comprising
a further filter device (110) in the room (151) at a distance from the filter device (110), wherein the further filter device (110) comprises the further sensor element (121).

5. The filter system (100) according to claim 4,
wherein the further filter device (110) comprises a further filter element (112), wherein the further filter device (110) is in particular a part (140) of a central filter system of a building (150), or
wherein the further filter device (110) comprises a further fan unit (111) and is in particular configured to be movable.

6. The filter system (100) according to one of the claims 1 to 5,
wherein the control unit (130) is in particular configured based on the position data of a thermal image map, a local distribution image of a gas concentration, in particular a CO2 concentration distribution or O2 concentration distribution, a person distribution, a noise level change, an aerosol distribution, a moisture distribution, a virus distribution, a fine dust concentration distribution.

7. The filter system (100) according to one of the claims 1 to 6,
wherein the control unit (130) is configured to control the filter device (110), in particular the fan unit (111), based on the room state and/or the filter state, wherein the control unit (130) is in particular configured to control the filter device (110), in particular the fan unit (111), variably such that this variation displaces the spatial suction area, in particular such that the influence of the variation of the suction area co-determines the determination of the room state.

8. The filter system (100) according to one of the claims 1 to 7, comprising at least one of the following features
wherein the control unit (130) is configured to control the filter device (110), in particular the fan unit (111), variably such that a future energy availability and/or the current and/or future energy consumption of the filter system (100) and/or of the building (150) can be taken into account,
wherein the control unit (130) automatically or semi-automatically with approval function controls the filter device (110) based on the future energy availability and/or the current and/or future energy consumption of the filter system and/or of the building (150) and/or regulates it within a predefined range,
wherein the filter element (112) is configured such that a pressure drop of the air (101) flowing through the filter element (112) is less than 450 Pa, in particular less than 250 Pa, further in particular less than 150 Pa,
wherein the filter device (110) is configured such that an air volume per hour and square meter of filter area is less than 600 m³/(m²xh), in particular less than 140 m³/(m²xh), less than 85 m³/(m²xh) or less than 50 m³/(m²xh), and/or
the velocity of the volume flow of the air (101) through the filter device (110) is in the range 0.1 to 5 m/s, in particular in the range 0.2 m/s to 3.4 m/s, further in particular between 0.3 m/s to 2.8 m/s,
wherein the control unit (130) is arranged separately from the filter device (110) and the further sensor element (121), and
wherein the control unit (130) is configured to determine an energy consumption of the filter device (110) based on the determined room state and/or the determined filter state, and/or
wherein the control unit (130) is configured to determine control data for the filter device (110), in particular for the fan unit (111), based on the determined room state and/or the determined filter state and to display them to a user and/or to automatically control at least one filter device (110), preferably a plurality of, in particular all, filter devices (110), by means of the control data.

9. The filter system (100) according to one of the claims 1 to 8, comprising at least one of the following features
wherein the control unit (130) is configured to analyze the room state based on the determined fine dust as air parameter, in particular based on the frequency of occurrence of the fine dust, in particular a frequency of diameter classes of the fine dust and/or the composition of the fine dust, in particular in real time,
wherein the control unit (130) is coupled to the filter device (110) and/or to the further sensor element (121) for wireless signal exchange of sensor signals or control commands,
wherein the filter device (110) provides filter-related data to the control unit (130), in particular by means of RFID, NFC, Bluetooth, WLAN or protocols of building control technology,
wherein the control unit (130) is in particular configured such that a warning signal can be generated on the basis of the filter-related data and/or a measure can be taken which relates to a throughput through the filter device (110), and
wherein the control unit (130) obtains a UniqueID from the filter device (110), wherein the UniqueID comprises information regarding the location of use of the filter device (110),
wherein the control unit receives the UniqueID via NFC, Bluetooth, WLAN, proprietary protocols or protocols of building control systems, in particular LON or EIB,
wherein the operation and/or the configuration of the filter device (110) can be set based on the UniqueID.

10. The filter system (100) according to one of the claims 1 to 9,
wherein the filter element (112) comprises a filter material which contains one layer of nonwoven fabric, in particular a plurality of layers of nonwoven fabric, wherein the filter element (112) can be replaceably arranged in the filter device (110),
wherein in particular the filter element (112) is a disposable filter,
wherein the filter element (112) in particular comprises at least two nonwoven fabric layers (151, 153) and a filter membrane (152) arranged between the nonwoven fabric layers (151, 153), which are arranged in a layered manner one above the other in a layered composite,
wherein in particular the middle filter membrane (152) of the layered composite comprises a larger surface area than the two outer nonwoven fabric layers (151, 153),
wherein a first direction (x) and a second direction (y) span a plane,
wherein the middle filter membrane (152) is in particular configured to be corrugated with corrugation portions such that the corrugation portions are arranged one behind the other along a first direction (x),
wherein the corrugation portions run in particular within the plane irregularly and asymmetrically with respect to one another, and
wherein the filter element (112) is arranged such that air (101) can flow over the filter element (112) along the first direction (x) or along the second direction (y), wherein the filter element (112) in particular has a thickness of 2 mm to 10 mm, in particular of 3 mm to 7 mm, and/or
wherein the number of corrugation portions is in particular between 0.5 and 3 corrugations per cm.

11. The filter system (100) according to one of the claims 1 to 10, comprising at least one of the following features
wherein the filter element (112) comprises a filter material which is hydrophobic and/or contains a natural fiber or a polyolefin, in particular a polypropylene, in particular wherein the filter contains cellulose, cotton and/or hemp,
wherein the filter device (110) comprises a weighing device (114) which is configured to weigh the filter occupancy of the filter element (111), in particular wherein a measured value falsification can be compensated by the pressure of the air (101) flowing through the filter device (110), and
wherein the filter device (110) comprises an electrical supply unit which is configured to obtain energy by means of the air flow through the filter device (110) and/or by electromagnetic waves, which energy is in particular used for the operation of the sensor element (113, 121) and/or of the filter device (110).

12. The filter system (100) according to one of the claims 1 to 11, further comprising
a data storage unit (132) which is coupled to the control unit (130), to the filter device (110) and to the further sensor element (121) for exchanging data, wherein in particular the data can be protected by means of a certificate and/or an encryption,
wherein in particular the data represent measured values selected from the group consisting of air throughput through the filter device (110), air temperature, air pressure, in particular absolute pressure and/or differential pressure, filter occupancy of the filter element (112), air humidity, aerosol pollution, PM content and/or foreign matter content of the air, measuring location of the air measurement.

13. The filter system (100) according to one of the claims 1 to 12,
wherein the sensor element (113) is a dynamic pressure gauge (402) and is in particular configured such that a static pressure upstream of the filter element (112) and a static and dynamic pressure downstream of the filter element (112) can be measured, and/or
wherein the sensor element (113) comprises a microphone which is configured to detect the noise level in a room (151) such that the number and intensity of speech-active persons in the room can be determined by means of measurement and evaluation of the noise level in the room (151).

14. A building (150), comprising
a plurality of rooms (151),
a filter system (100) according to one of the claims 1 to 13,
wherein the filter system (100) comprises a central ventilation system which comprises at least one further fan unit (111) and respectively one ventilation outlet in the corresponding rooms (151),
wherein the control unit (130) is configured to control the further fan unit (111), wherein the control unit (130) controls the filter device (110) and/or the central ventilation system based on the room state and/or the filter state.

15. A method for filtering air (101) in rooms (151) of a building (150) with a filter system (100) according to one of the claims 1 to 13.

## Revendications

1. Système de filtration (100) permettant de filtrer l'air (101) dans des pièces (151) d'un bâtiment (150), le système de filtration (100) comprenant
un dispositif de filtration (110) comprenant une unité de ventilation (111) et un élément filtrant (112) qui peut être placé dans une pièce (151),
dans lequel l'air (101) à filtrer peut circuler à travers l'élément filtrant (112) au moyen de l'unité de ventilation (111) en vue de la filtration,
dans lequel le dispositif de filtration (110) présente un élément formant capteur (113) afin de déterminer au moins un paramètre de dispositif de filtration présentant au moins un paramètre d'air de l'air (101) à filtrer au niveau du dispositif de filtration (110) ou un paramètre de fonctionnement du dispositif de filtration (110),
un élément formant capteur (121) supplémentaire, qui peut être placé à une certaine distance du dispositif de filtration (110) et qui est conçu pour déterminer au moins un paramètre d'air supplémentaire au niveau de l'élément formant capteur (121) supplémentaire ;
une unité de commande (130) qui est couplée au dispositif de filtration (110) et à l'élément formant capteur (121) supplémentaire et qui est configurée pour déterminer au moins un état de pièce ou un état de filtre en se basant sur le paramètre de dispositif de filtration et sur le paramètre d'air supplémentaire,
dans lequel l'unité de commande (130) est configurée pour déterminer les données de position du dispositif de filtration (110) et/ou de l'élément formant capteur (121) supplémentaire et/ou pour prendre en compte les données de position préconfigurées de manière à pouvoir représenter des images graphiques d'une pièce avec des concentrations locales correspondantes de paramètres d'air au moyen de la connaissance des données de position de l'élément formant capteur et de l'élément formant capteur supplémentaire.

2. Système de filtration (100) selon la revendication 1,
dans lequel au moins le paramètre d'air ou le paramètre d'air supplémentaire est sélectionné parmi le groupe constitué de la teneur en CO, de la teneur en CO2, de l'hygrométrie relative, la pression atmosphérique, de la teneur en oxygène, de la vitesse de circulation de l'air, de la teneur en substances étrangères, notamment en particules étrangères, en particulier de la teneur en particules fines, de la taille des particules étrangères, en particulier du diamètre des particules étrangères, du type de particules étrangères, du point de rosée et de la température de l'air, et/ou dans lequel au moins le paramètre de fonctionnement du dispositif de filtration (110) est choisi parmi le groupe constitué de la consommation d'énergie du dispositif de filtration (110), du débit d'air à travers l'élément filtrant (112), du volume sonore de l'unité de ventilation (111), du volume d'écoulement de l'air (101) en circulation et de la température de l'unité de ventilation (111) et de la chute de pression de l'air (101) en circulation au-dessus de l'élément filtrant (112).

3. Système de filtration (100) selon la revendication 1 ou 2, présentant au moins une des caractéristiques ci-dessous
l'unité de commande (130) est configurée pour déterminer au moins l'état de filtre, lequel est sélectionné parmi le groupe constitué d'un remplissage de filtre de l'élément filtrant (112), d'une indication de remplacement de filtre et d'une indication d'entretien de ventilateur,
l'unité de commande (130) présente un élément d'affichage (131) permettant d'afficher l'état de pièce et/ou l'état de filtre, et
l'élément formant capteur (121) supplémentaire est agencé dans la même pièce (151) que le dispositif de filtration (110) ou
l'élément formant capteur (121) supplémentaire est agencé dans une pièce (151) différente de celle du dispositif de filtration (110).

4. Système de filtration (100) selon l'une quelconque des revendications 1 à 3, présentant en outre un dispositif de filtration (110) supplémentaire dans la pièce (151) à distance du dispositif de filtration (110), dans lequel le dispositif de filtration (110) supplémentaire présente l'élément de détection (121) supplémentaire.

5. Système de filtration (100) selon la revendication 4,
dans lequel le dispositif de filtration (110) supplémentaire présente un élément filtrant (112) supplémentaire,
dans lequel le dispositif de filtration (110) supplémentaire est en particulier une partie (140) d'une installation de filtration centrale d'un bâtiment (150), ou
dans lequel le dispositif de filtration (110) supplémentaire présente une unité de ventilation (111) supplémentaire et est en particulier conçu pour être mobile.

6. Système de filtration (100) selon l'une quelconque des revendications 1 à 5,
dans lequel l'unité de commande (130) est en particulier configurée pour, en se basant sur les données de position, créer une carte d'imagerie thermique, une image de distribution locale d'une concentration en gaz, en particulier d'une distribution de concentration en CO2 ou d'une distribution de concentration en O2, d'une distribution de personnes, d'une modification de niveau sonore, d'une distribution d'aérosol, d'une distribution d'humidité, d'une distribution virale, d'une distribution de concentration en particules fines.

7. Système de filtration (100) selon l'une quelconque des revendications 1 à 6,
dans lequel l'unité de commande (130) est configurée pour, en se basant sur l'état de pièce et/ou sur l'état de filtre, commander le dispositif de filtration (110), en particulier l'unité de ventilation (111)
dans lequel l'unité de commande (130) est en particulier configurée pour commander de manière variable le dispositif de filtration (110), en particulier l'unité de ventilation (111), de telle manière que ladite variation déplace la zone d'aspiration spatiale, en particulier de telle manière que l'influence de la variation de la zone d'aspiration codétermine la détermination de l'état de pièce.

8. Système de filtration (100) selon l'une quelconque des revendications 1 à 7, présentant au moins une des caractéristiques ci-dessous
l'unité de commande (130) est configurée pour commander de manière variable le dispositif de filtration (110), en particulier l'unité de ventilation (111), de manière à pouvoir tenir compte d'une disponibilité d'énergie future et/ou de la consommation d'énergie actuelle et/ou future du système de filtration (100) et/ou du bâtiment (150),
l'unité de commande (130) commande, de manière automatique ou partiellement automatique avec une fonction d'approbation, le dispositif de filtration (110) en se basant sur la disponibilité d'énergie future et/ou sur la consommation d'énergie actuelle et/ou future du système de filtration et/ou du bâtiment (150), et/ou le régule à l'intérieur d'une plage prédéfinie,
l'élément filtrant (112) est conçu de telle manière qu'une chute de pression de l'air (101) en circulation à travers l'élément filtrant (112) est inférieure à 450 Pa, en particulier inférieure à 250 Pa, en particulier inférieure à 150 Pa,
le dispositif de filtration (110) est configuré de telle manière qu'un volume d'air par heure et par mètre carré de surface de filtration est inférieur à 600 m³/(m²xh), en particulier inférieur à 140 m 3/(m²xh), inférieur à 85 m³/(m²xh) ou inférieur à 50 m³/(m²xh), et/ou que la vitesse du débit de l'air (101) à travers le dispositif de filtration (110) se situe dans la plage comprise entre 0,1 et 5 m/s, en particulier dans la plage comprise entre 0,2 m/s et 3,4 m/s, en outre en particulier dans la plage comprise entre 0,3 m/s et 2,8 m/s,
l'unité de commande (130) est agencée séparément du dispositif de filtration (110) et de l'élément formant capteur (121) supplémentaire, et
l'unité de commande (130) est configurée pour, en se basant sur l'état de pièce déterminé et/ou sur l'état de filtre déterminé, déterminer une consommation d'énergie du dispositif de filtration (110), et/ou
l'unité de commande (130) est configurée pour, en se basant sur l'état de pièce déterminé et/ou sur l'état de filtre déterminé, déterminer des données de commande pour le dispositif de filtration (110), en particulier pour l'unité de ventilation (111), et pour les afficher à l'intention d'un utilisateur, et/ou commande au moins un dispositif de filtration (110), de manière préférée plusieurs, en particulier la totalité des dispositifs de filtration (110), de manière automatique au moyen des données de commande.

9. Système de filtration (100) selon l'une quelconque des revendications 1 à 8, présentant au moins une des caractéristiques ci-dessous
l'unité de commande (130) est configurée pour analyser l'état de pièce en se basant, en tant que paramètre d'air à analyser, sur la poussière fine déterminée, en particulier en se basant sur la fréquence d'apparition de la poussière fine, en particulier sur une fréquence des classes de diamètre de la poussière fine et/ou sur la composition de la poussière fine, en particulier en temps réel, dans lequel l'unité de commande (130) est couplée au dispositif de filtration (110) et/ou à l'élément formant capteur (121) supplémentaire en vue d'un échange sans fil de signaux de capteur ou d'instructions de commande,
le dispositif de filtration (110) fournit des données de l'unité de commande (130) relatives au filtre, en particulier au moyen de RFID, NFC, Bluetooth, WLAN ou de protocoles de gestion technique de bâtiment,
l'unité de commande (130) est en particulier configurée pour qu'un signal d'avertissement puisse être généré et/ou pour qu'une mesure concernant un débit à travers le dispositif de filtration (110) puisse être prise, en se basant sur les données relatives au filtre, et
l'unité de commande (130) reçoit du dispositif de filtration (110) un identifiant unique, dans lequel l'identifiant unique présente des informations concernant le lieu d'utilisation du dispositif de filtration (110),
le dispositif de commande reçoit l'identifiant unique par l'intermédiaire de NFC, Bluetooth, WLAN, protocoles propriétaires ou protocoles de systèmes de gestion technique des bâtiments, en particulier LON ou EIB,
le fonctionnement et/ou la configuration du dispositif de filtration (110) peu(ven)t être ajusté(e) (s) en se basant sur l'identifiant unique.

10. Système de filtration (100) selon l'une quelconque des revendications 1 à 9,
dans lequel l'élément filtrant (112) présente un matériau filtrant qui contient une couche de non-tissé, en particulier plusieurs couches de non-tissé,
dans lequel l'élément filtrant (112) peut être agencé de manière interchangeable dans le dispositif de filtration (110),
dans lequel l'élément filtrant (112) est un filtre jetable,
dans lequel l'élément filtrant (112) présente en particulier au moins deux couches de non-tissé (151, 153) et une membrane filtrante (152) agencée entre les couches de non-tissé (151, 153), lesquelles couches et membrane sont agencées en couches l'une au-dessus de l'autre au sein d'un composite stratifié,
dans lequel en particulier la membrane filtrante centrale (152) du composite stratifié présente une surface supérieure à celle des deux couches externes de non-tissé (151, 153),
dans lequel une première direction (x) et une seconde direction (y) s'étendent dans un plan,
dans lequel la membrane filtrante centrale (152) est conçue en particulier de manière ondulée avec des sections d'ondulations de telle manière que les sections d'ondulations sont agencées les unes derrière les autres le long d'une première direction (x),
dans lequel les sections d'ondulations s'étendent de manière irrégulière et asymétrique les unes par rapport aux autres, en particulier à l'intérieur du plan, et
dans lequel l'élément filtrant (112) est agencé de telle manière que l'élément filtrant (112) peut être saturé d'air (101) le long de la première direction (x) ou le long de la deuxième direction (y),
et de telle manière que l'élément filtrant (112) présente en particulier une épaisseur comprise entre 2 mm et 10 mm, en particulier comprise entre 3 mm et 7 mm, et/ou
dans lequel le nombre de sections d'ondulations est en particulier compris entre 0,5 et 3 ondulations par cm.

11. Système de filtration (100) selon l'une quelconque des revendications 1 à 10, présentant au moins une des caractéristiques ci-dessous
l'élément filtrant (112) présente un matériau filtrant qui est hydrophobe et/ou contient une fibre naturelle ou une polyoléfine, en particulier un polypropylène, en particulier le filtre contient de la cellulose, du coton et/ou du chanvre,
le dispositif de filtration (110) présente un dispositif de pesée (114) qui est conçu pour peser le remplissage de filtre de l'élément filtrant (111), en particulier une distorsion de valeur de mesure peut être compensée par la pression de l'air (101) circulant à travers le dispositif de filtration (110), et
le dispositif de filtration (110) présente une unité d'alimentation électrique qui est configurée pour obtenir de l'énergie au moyen du flux d'air à travers le dispositif de filtration (110) et/ou grâce à des ondes électromagnétiques et qui est utilisée en particulier pour le fonctionnement de l'élément formant capteur (113, 121) et/ou du dispositif de filtration (110).

12. Système de filtration (100) selon l'une quelconque des revendications 1 à 11, présentant en outre
une unité de stockage de données (132) qui est couplée à l'unité de commande (130), au dispositif de filtration (110) et à l'élément de détection (121) supplémentaire en vue de l'échange de données,
dans lequel en particulier les données peuvent être protégées au moyen d'un certificat et/ou d'un cryptage,
dans lequel les données représentent en particulier des valeurs de mesure sélectionnées parmi le groupe constitué du débit d'air à travers le dispositif de filtration (110), de la température de l'air, de la pression atmosphérique, en particulier de la pression absolue et/ou de la pression différentielle, du remplissage du filtre de l'élément filtrant (112), de l'hygrométrie, de la charge en aérosol, de la teneur en poussière fine et/ou de la teneur en substances étrangères de l'air, du lieu de mesure de la mesure de l'air.

13. Système de filtration (100) selon l'une quelconque des revendications 1 à 12,
dans lequel l'élément formant capteur (113) est un indicateur de pression dynamique (402) et est en particulier conçu de telle manière qu'une pression statique en amont de l'élément filtrant (112) et une pression statique et dynamique en aval de l'élément filtrant (112) peuvent être mesurées, et/ou
dans lequel l'élément formant capteur (113) présente un microphone qui est configuré pour détecter le niveau de bruit dans une pièce (151) de telle manière que le nombre et l'intensité des personnes en train de parler dans la pièce peuvent être déterminés en mesurant et en évaluant le niveau de bruit dans la pièce (151).

14. Bâtiment (150), présentant,
une pluralité de pièces (151),
un système de filtration (100) selon l'une quelconque des revendications 1 à 13,
dans lequel le système de filtration (100) présente une installation de ventilation centrale qui présente au moins une unité de ventilation (111) supplémentaire et respectivement une sortie de ventilation dans les pièces (151) correspondantes,
dans lequel l'unité de commande (130) est configurée pour commander l'unité de ventilation (111) supplémentaire,
dans lequel l'unité de commande (130) commande le dispositif de filtration (110) et/ou l'installation de ventilation centrale en se basant sur l'état de pièce et/ou sur l'état de filtre.

15. Procédé de filtration de l'air (101) dans des pièces (151) d'un bâtiment (150), comprenant un système de filtration (100) selon l'une quelconque des revendications 1 à 13.
